# EUROPEAN PATENT APPLICATION

(11) **EP 4 746 422 A1**
(43) Date of publication of application: **20.05.2026**
(21) Application number: 24880890.9
(22) Date of filing: 02.02.2024
(51) Int. Cl.: H04N 21/431

(54) **MEDIA DATA GENERATION METHOD AND ELECTRONIC DEVICE**

(30) Priority: 27.10.2023 CN 202311418278
(71) Applicant: Honor Device Co., Ltd., Shenzhen, Guangdong 518040 (CN)
(72) Inventor: YI, Jie, Shenzhen, Guangdong 518040 (CN); LUO, Lan, Shenzhen, Guangdong 518040 (CN)
(74) Representative: Isarpatent
(86) International application number: PCT/CN2024/075492
(87) International publication number: WO 2025/086503

(57) **Abstract**

Embodiments of this application provide a media data generation method and an electronic device, and relate to the field of interaction technologies, to resolve a problem of low intelligence of media data creation. A specific solution is as follows: displaying a first interface, where the first interface displays a preview stream collected in real time by the camera, and the first interface further displays a first material; displaying a second interface in response to a sliding operation performed by a user on the first material, where the second interface displays a preview stream collected in real time by the camera, and the second interface further displays a second material; photographing a third material in response to a first operation performed by the user to indicate photographing; and displaying a second interface in response to a second operation, where the second interface displays first stitched data including the first material and the third material.

## Description

This application claims priority to Chinese Patent Application No. 202311418278.6, filed with the China National Intellectual Property Administration on October 27, 2023, and entitled "MEDIA DATA GENERATION METHOD AND ELECTRONIC DEVICE", which is incorporated herein by reference in its entirety.

### TECHNICAL FIELD

Embodiments of this application relate to the field of terminal technologies, and in particular, to a media data generation method and an electronic device.

### BACKGROUND

With advances in technology, an electronic device (for example, a mobile phone or a tablet computer) is configured with a camera, to meet a requirement of recording and sharing life by a user anytime and anywhere.

### SUMMARY

Embodiments of this application provide a media data generation method and an electronic device. After a user is guided to photograph a material based on a reference material, media data including the reference material and the photographed material is automatically created, to reduce difficulty in creating high-quality media data and improve device intelligence.

To achieve the foregoing objective, the following technical solutions are used in embodiments of this application.

According to a first aspect, an embodiment of this application provides a media data generation method, applied to an electronic device. The electronic device displays a first interface. The first interface is used for photographing. The first interface displays a preview stream collected in real time by a camera and a first material. The first material is a photo, a video, a dynamic picture, or the like that is recommended to a user for photographing reference.

The electronic device displays a second interface in response to a sliding operation performed by the user on the first material. The sliding operation performed on the first material may be an operation whose sliding track is located in a display area of the first material. The second interface is also used for photographing. The second interface displays a preview stream collected in real time by the camera and a second material. To be specific, compared with the first interface, the second interface mainly changes in display content in an area that displays a reference material. Another area still displays a preview stream collected in real time by the camera or another control in a camera interface.

When displaying the second interface, the electronic device photographs a third material in response to a first operation performed by the user to indicate photographing. The electronic device displays a third interface in response to a second operation performed to indicate to end photographing. The third interface displays first stitched data including the second material and the third material.

In the foregoing embodiment, in a photographing process, a photographing interface may display a material recommended to the user for reference, to help the user perform photographing with reference to the recommended material, and reduce difficulty in photographing a high-quality material. In addition, the user may manually switch the reference material recommended in the photographing interface, to improve photographing flexibility. Then, stitched data including the reference material and a currently photographed material is automatically generated, to reduce difficulty in creating high-quality media data and improve device intelligence.

In a possible implementation, when displaying the first interface, the electronic device photographs a new material corresponding to the first material in response to an operation performed by the user to indicate photographing. In this case, the third interface further displays stitched data including the first material and the new material corresponding to the first material.

In some embodiments, the first material and the second material are materials that meet one or more of the following first conditions: a photographing location is the same as a current location of the electronic device, or a distance is less than a preset distance threshold; and a time interval between a photographing time and a current time point exceeds a preset time threshold.

In the foregoing embodiment, a reference material that meets the first condition is recommended, to guide the user to photograph a material that conforms to an old place revisiting theme. This reduces difficulty in creating media data on the old place revisiting theme, improves satisfaction of the user with created stitched data, and reduces a rework rate.

In some embodiments, a first card is displayed when a material that meets the first condition is stored in the electronic device. The first condition includes a combination of one or more of the following: a photographing location is the same as a current location of the electronic device, or a distance is less than a preset distance threshold; and a time interval between a photographing time and a current time point exceeds a preset time threshold. The electronic device may detect an operation performed by the user on the first card. The first interface is displayed after the operation performed by the user on the first card is detected.

In the foregoing embodiment, the electronic device may recognize, in a timely manner, an occasion of photographing a material that conforms to the old place revisiting theme, to recommend, in a timely manner, the user to perform photographing, trigger creation, and improve recommendation timeliness.

For example, the electronic device displays an interaction window in response to the operation performed by the user on the first card. The interaction window includes a first control and a first display column, and the first display column includes the first material and the second material. The first interface is displayed in response to that the user taps the first control.

In some embodiments, after the third material is photographed and before the third interface is displayed, the electronic device displays the fourth interface in response to the third operation. The fourth interface is also used for photographing, the fourth interface displays a preview stream collected in real time by the camera, the fourth interface further displays a fourth material, and the fourth material is different from the second material. A fifth material is photographed in response to the first operation performed by the user to indicate photographing. After the fifth material is photographed, the third interface further includes second stitched data, and the second stitched data includes the fourth material and the fifth material.

In the foregoing embodiment, when a plurality of reference materials are recommended by the electronic device to the user, after the user performs photographing based on one reference material, a next reference material may continue to be recommended, so that the user can refer to the next reference material, and continue photographing, to obtain more available materials, thereby improving human-computer interaction efficiency of photographing.

In some embodiments, first media data is displayed in response to a fourth operation in the third interface. The first media data is a video including the first stitched data and the second stitched data.

In some embodiments, a similarity evaluation value between the third material and the second material is higher than a similarity evaluation value between the third material and the fourth material, a similarity evaluation value between the fifth material and the fourth material is higher than a similarity evaluation value between the fifth material and the second material, the similarity evaluation value is a quantized value of a similarity between image content of different materials, and a higher similarity between person postures in the different materials corresponds to a higher similarity evaluation value. In this way, image quality of the stitched data can be ensured.

In some embodiments, after the interaction window is displayed, a sixth material is newly displayed in the first display column if a first voice instruction of the user is detected, where the sixth material is also a material that meets the first condition; or displaying of the fourth material in the first display column is canceled if a second voice instruction of the user is detected; or the fourth material in the first display column is changed to the sixth material if a third voice instruction of the user is detected.

In the foregoing embodiment, before the user indicates photographing, the reference material recommended by the electronic device may be previewed, and the reference material may be further adjusted based on a voice instruction, to improve human-computer interaction efficiency of the electronic device.

In some embodiments, after the interaction window is displayed, a fifth interface is displayed after an operation performed by the user on the first display column is detected. The fifth interface includes the first material, the second material, the fourth material, and a sixth material, "selected" identifiers are displayed in the fifth interface for the first material, the second material, and the fourth material, an "unselected" identifier is displayed for the sixth material, the sixth material is also a material that meets the first condition, a selection preview box is displayed in the fifth interface, and the selection preview box includes a thumbnail of the first material, a thumbnail of the second material, and a thumbnail of the fourth material. The "unselected" identifier displayed for the sixth material is changed to the "selected" identifier in response to an operation performed by the user on the sixth material. A thumbnail of the sixth material is newly displayed in the selection preview box. Displaying of the fifth interface is canceled in response to a confirmation operation performed by the user in the selection preview box, and the interaction window is re-displayed. The sixth material is newly displayed in the first display column in the interaction window.

In some other embodiments, after the interaction window is displayed, a fifth interface is displayed after an operation performed by the user on the first display column is detected. The fifth interface includes the first material, the second material, and the fourth material, "selected" identifiers are displayed in the fifth interface for the first material, the second material, and the fourth material, a selection preview box is displayed in the fifth interface, and the selection preview box includes a thumbnail of the first material, a thumbnail of the second material, and a thumbnail of the fourth material. The "selected" identifier displayed for the fourth material is changed to the "unselected" identifier in response to an operation performed by the user on the thumbnail of the fourth material in the selection preview box. Displaying of the thumbnail of the fourth material is canceled in the selection preview box. Displaying of the fifth interface is canceled in response to a confirmation operation performed by the user in the selection preview box, and the interaction window is re-displayed. Displaying of the fourth material is canceled in the first display column in the interaction window.

In the foregoing embodiment, the user may manually adjust the recommended reference material, so that a material satisfactory to the user can be photographed subsequently.

In some embodiments, an aesthetic score of the first material, an aesthetic score of the second material, and an aesthetic score of the fourth material are higher than an aesthetic score of another material that meets the first condition in the electronic device. In this way, quality of the recommended reference material is ensured.

In some embodiments, after the third material is photographed, the electronic device may display a sixth interface. The sixth interface is a preview interface of the third material, and the sixth interface includes a second control. That the third interface is displayed in response to the second operation includes: displaying the third interface in response to an operation performed by the user on the second control. In this way, photographing may end in advance when the user photographs a material without referring to all reference materials, to improve photographing flexibility.

In some embodiments, after the third material is photographed, the electronic device displays a sixth interface, where the sixth interface is a preview interface of the third material, and the sixth interface includes a third control; displays a fourth interface in response to an operation performed by the user on the third control, where the fourth interface displays a preview stream collected in real time by the camera, the fourth interface further displays a fourth material, and the fourth material is different from the second material.

According to a second aspect, an embodiment of this application provides a media data generation method, applied to an electronic device. The electronic device includes a camera, and the method includes: displaying a first card when a material that meets a first condition is stored in the electronic device, where the first condition includes a combination of one or more of the following: a photographing location is the same as a current location of the electronic device, or a distance is less than a preset distance threshold; and a time interval between a photographing time and a current time point exceeds a preset time threshold; displaying an interaction window after an operation performed by a user on the first card is detected, where the interaction window includes a first control and a first display column, the first display column includes a first material and a second material, and the first material and the second material are materials that meet the first condition; displaying a seventh interface in response to an operation performed by the user on the first control, where the seventh interface displays a preview stream collected in real time by the camera; photographing a seventh material in response to a first operation performed by the user to indicate photographing; re-displaying the interaction window in response to a second operation, where a second display column is newly displayed in the interaction window, and the seventh material is displayed in the second display column; and newly displaying third stitched data in the interaction window in response to a fifth operation performed by the user, where the third stitched data includes the seventh material and the second material, and a similarity evaluation value between the seventh material and the second material is higher than a similarity evaluation value between the seventh material and the first material, where the similarity evaluation value is a quantized value of a similarity between image content of different materials, and a higher similarity between person postures in the different materials corresponds to a higher similarity evaluation value.

In some embodiments, the interaction window further includes a fourth control, the fourth control is displayed for the first display column, and the method further includes: displaying second media data in the interaction window in response to an operation performed by the user on the fourth control, where the second media data includes the first material and the second material.

According to a third aspect, an embodiment of this application provides an electronic device, including a processor and a memory. The memory is configured to store code instructions. The processor is configured to run the code instructions, so that the electronic device performs the method described in the first aspect, the second aspect, and any implementation thereof.

According to a fourth aspect, an embodiment of this application provides a computer-readable storage medium. The computer-readable storage medium stores instructions. When the instructions are executed, a computer is enabled to perform the method described in the first aspect, the second aspect, and any implementation thereof.

According to a fifth aspect, a computer program product is provided, including a computer program. When the computer program is run, a computer is enabled to perform the method described in the first aspect, the sixth aspect, and any implementation thereof.

It should be understood that the technical solutions in the second aspect to the fifth aspect of this application correspond to the technical solutions in the first aspect of this application. Beneficial effect achieved in the aspects and corresponding feasible implementations are similar, and details are not described again.

### BRIEF DESCRIPTION OF DRAWINGS

FIG. 1 is a schematic diagram of a structure of an electronic device according to an embodiment of this application;
FIG. 2 is a flowchart of a media data generation method according to an embodiment of this application;
FIG. 3A to FIG. 3D are an example diagram of a scenario of recommending photographing a target material related to an old place revisiting theme according to an embodiment of this application;
FIG. 4A(1) and FIG. 4A(2) are an example diagram of a scenario of switching different reference materials in a process of photographing a target material according to an embodiment of this application;
FIG. 4B(1) to FIG. 4B(3) are an example diagram of a scenario of switching different photographing modes in a process of photographing a target material according to an embodiment of this application;
FIG. 5A to FIG. 5D are an example diagram 1 of a scenario of photographing and storing a target material according to an embodiment of this application;
FIG. 6A(1) to FIG. 6A(4) are an example diagram 2 of a scenario of photographing and storing a target material according to an embodiment of this application;
FIG. 6B is an example diagram 1 of a video stitching manner according to an embodiment of this application;
FIG. 6C is an example diagram 2 of a video stitching manner according to an embodiment of this application;
FIG. 7A to FIG. 7C are an example diagram of a scenario in which a reference material is added based on a voice instruction according to an embodiment of this application;
FIG. 8A and FIG. 8B are an example diagram of a scenario in which a reference material is reduced based on a voice instruction according to an embodiment of this application;
FIG. 9A to FIG. 9D are an example diagram 1 of a scenario in which a user manually reduces a reference material according to an embodiment of this application;
FIG. 10A to FIG. 10D are an example diagram 2 of a scenario in which a user manually reduces a reference material according to an embodiment of this application;
FIG. 11A to FIG. 11C are an example diagram of a scenario in which a user manually adds a reference material according to an embodiment of this application;
FIG. 12A to FIG. 12D are an example diagram 3 of a scenario of photographing and storing a target material according to an embodiment of this application;
FIG. 13A and FIG. 13B are an example diagram 1 of a scenario in which media data is created according to an embodiment of this application;
FIG. 14A to FIG. 14C are an example diagram 2 of a scenario in which media data is created according to an embodiment of this application; and
FIG. 15A and FIG. 15B are an example diagram of a scenario in which a puzzle is created according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

In addition, in embodiments of this application, the word "example", "for example", or the like is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In the technical solutions disclosed in this application, processing such as collection, storage, use, processing, transmission, provision, and disclosure of personal information of a user is in compliance with provisions of related laws and regulations, and does not violate public order or good customs.

With development of terminal technologies, a user uses an electronic device more frequently. Most electronic devices are configured with a camera, to meet a requirement of recording and sharing life by a user anytime and anywhere. In this way, the user may use the electronic device to photograph a material, for example, a video or a photo, anytime and anywhere. In addition, the electronic device may further create corresponding media data based on the photographed material in response to an operation performed by the user.

Most users lack experience in creating the media data, and it is usually very difficult for the users to figure out when to photograph what material, and how to create the media data based on the photographed material. Consequently, a media data creation function provided by the electronic device has a low usage rate.

To alleviate the foregoing problem, an embodiment of this application provides a media data generation method, which may be applied to an electronic device including a camera. After the method is enabled, in response to that a target scene is recognized, the electronic device may guide the user to photograph one or more target materials. The target scene is suitable for photographing a material that conforms to a preset theme. Then, media data that conforms to the preset theme is created based on the one or more photographed target materials.

In the foregoing embodiment, the electronic device guides, on a proper occasion, the user to photograph a material and create media data that meets the preset theme, to reduce difficulty in creating the media data, improve satisfaction of the user with the created media data, improve the usage rate of the media data creation function, and increase intelligence of the electronic device.

For example, the preset theme may include a plurality of types of themes such as an old place revisiting theme, a party theme, and an internet-famous spot check-in theme. Different preset themes conform to different target scenes.

It may be understood that the electronic device may distinguish different target scenes based on a feature in a time dimension and/or a feature in a spatial dimension.

For example, if it is detected that the electronic device is located in a location (for example, a scenic spot) in which a material is photographed, the electronic device determines that the current scene is a target scene that conforms to (matches) the old place revisiting theme.

For another example, when it is detected that a system time reaches a party time, or it is detected that the electronic device is located in a place (for example, a restaurant) used for holding a party, the electronic device determines that the current scene is a target scene that conforms to the party theme.

For another example, when it is detected that the electronic device is located in an internet-famous spot, the electronic device determines that the current scene is a target scene that conforms to the internet-famous spot check-in theme. The internet-famous spot may be a place in which a plurality of persons perform photographing for check-in, or a place in which a popular material is photographed.

For example, the electronic device may count a quantity of users who have photographed a material at the current location, and when the quantity of users exceeds a preset quantity threshold, determine that the current location is an internet-famous spot. Alternatively, traffic information (a quantity of views, a quantity of likes, or a quantity of shares/comments) of media data whose photographing address is the same or similar to the current location (a distance is less than a preset distance threshold) is obtained, and when traffic information of any media data meets a preset condition (for example, a quantity of views is greater than a preset access threshold), it is determined that the current location is an internet-famous spot.

It should be noted that the media data includes a video or an image. In this embodiment of this application, a type of the media data generated by the electronic device is not limited. In addition, the foregoing material may be understood as a photo or a video that forms the media data.

For example, if a video D is obtained by editing a photo A, a photo B, and a video C that are collected, the photo A, the photo B, and the video C are all materials; and the video D is generated media data. For another example, if a video F is obtained by editing a collected photo E, the photo E is a material, and the video F is generated media data.

The electronic device may also be referred to as a terminal (terminal), a terminal device, user equipment (user equipment, UE), a mobile station (mobile station, MS), a mobile terminal (mobile terminal, MT), or the like.

For example, the electronic device may be an electronic device with a display and a camera, for example, a mobile phone, a tablet computer, a wearable device, a smart screen, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA); or may be a vehicle-mounted device with a display and a camera, for example, a vehicle-mounted computer or a vehicle-mounted computer; or may be an internet of things device with a display and a camera, for example, some smartwatches or smartbands. This embodiment of this application sets no limitation on a product form of the electronic device.

The following describes a hardware structure and a software architecture of the electronic device provided in embodiments of this application.

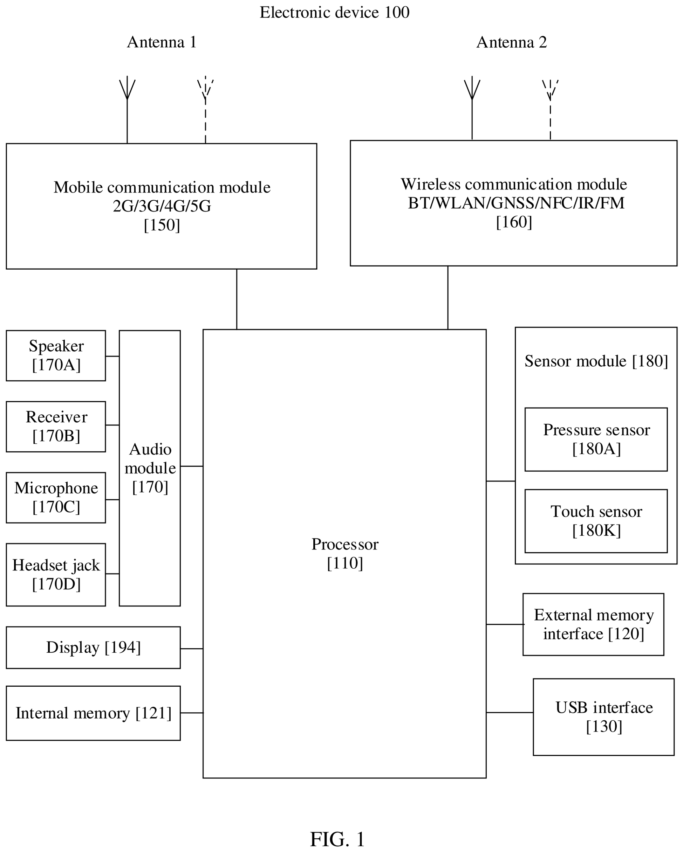

FIG. 1 is a schematic structural diagram of hardware of an electronic device 100. The electronic device 100 may include a processor 110, an external memory interface 120, an internal memory 121, a universal serial bus (universal serial bus, USB) interface 130, an antenna 1, an antenna 2, a mobile communication module 150, a wireless communication module 160, a display 194, an audio module 170, a subscriber identification module (subscriber identification module, SIM) card interface 195, and the like. A sensor module 180 may include a pressure sensor 180A, a touch sensor 180K, and the like. The audio module 170 may include a speaker 170A, a receiver 170B, a microphone 170C, a headset interface 170D, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The MIPI interface may be configured to connect the processor 110 and a peripheral component such as the display 194 or a camera 193. The MIPI interface includes a camera serial interface (camera serial interface, CSI), a display serial interface (display serial interface, DSI), and the like.

In some embodiments, the processor 110 and the camera 193 communicate with each other through the CSI interface, to implement a photographing function of the electronic device 100. The processor 110 communicates with the display 194 through the DSI interface, to implement a display function of the electronic device 100.

It may be understood that an interface connection relationship between modules shown in this embodiment of this application is merely schematically described, and does not constitute a structural limitation on the electronic device 100. In some other embodiments of this application, the electronic device 100 may also use different interface connection manners in the foregoing embodiment or a combination of a plurality of interface connection manners.

The USB interface 130 is an interface that conforms to a USB standard, and may be specifically a Mini USB interface, a Micro USB interface, a USB Type C interface, or the like. The USB interface 130 may be configured to be connected to a charger to charge the electronic device 100, or may be configured to transmit data between the electronic device 100 and a peripheral device, or may be configured to be connected to a headset, to play audio by using the headset. The interface may be further configured to be connected to another electronic device, for example, an AR device.

The electronic device 100 may implement a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, and the GPU executes program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194. N is a positive integer greater than 1.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A.

In some embodiments, touch operations that are performed in a same touch location but have different touch operation intensity may correspond to different operation instructions. For example, when a touch operation whose touch operation intensity is less than a first pressure threshold is performed on a Messaging application icon, an instruction for viewing an SMS message is executed. When a touch operation whose touch operation strength is greater than or equal to a first pressure threshold is performed on the Messaging application icon, an instruction for creating a new SMS message is executed.

The touch sensor 180K is also referred to as a touch panel. The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor, to determine a touch event type. A visual output related to the touch operation may be provided on the display 194. In some other embodiments, the touch sensor 180K may also be disposed on a surface of the electronic device 100 at a location different from that of the display 194.

The external memory interface 120 may be configured to be connected to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to execute various function applications and data processing of the electronic device 100. The internal memory 121 may include a program storage area and a data storage area. The program storage area may store an operating system, an application required by at least one function (for example, a voice playing function or an image playing function), and the like. The data storage area may store data (for example, audio data or an address book) created in a process of using the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

For example, the electronic device 100 may obtain a wake-up word by using the microphone 170C, and the electronic device 100 starts a voice assistant function in response to obtaining the wake-up word.

The voice assistant function of the electronic device may be understood as follows: The electronic device 100 collects a user voice by using the microphone, parses and recognizes the user voice, and executes an instruction corresponding to the user voice, so that the user controls the electronic device 100 by using the voice.

In some embodiments, the antenna 1 and the mobile communication module 150 in the electronic device 100 are coupled, and the antenna 2 and the wireless communication module 160 are coupled, so that the electronic device 100 can communicate with another device by using a wireless communication technology or a network.

For example, the electronic device 100 may obtain, by using the antenna 1 and the mobile communication module 150, or by using the antenna 2 and the wireless communication module 160, a material collected by the another device, and the electronic device 100 generates corresponding media data.

The following describes the method provided in this embodiment of this application with reference to the accompanying drawings by using an example in which the electronic device is a mobile phone and the mobile phone has the hardware structure shown in FIG. 1.

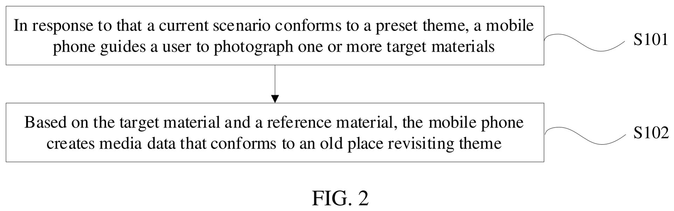

For example, as shown in FIG. 2, the method may include the following steps.

S101: In response to that a current scene conforms to a preset theme, a mobile phone guides a user to photograph one or more target materials.

The preset theme may include an old place revisiting theme, a party theme, an internet-famous spot check-in theme, and the like. In subsequent embodiments, descriptions are provided by using an example in which the preset theme is the old place revisiting theme.

In some embodiments, the mobile phone may use a preset artificial intelligence (Artificial Intelligence, AI) model, to recognize whether the current scene conforms to the preset theme. For example, the mobile phone may determine, by using the artificial intelligence model and based on current location information collected in real time by the mobile phone and a historical material stored in the mobile phone, that the current scene is a target scene that conforms to the old place revisiting theme, which may be referred to as that the current scene conforms to the old place revisiting theme.

The stored historical material may be data such as a video or an image photographed by this device, or may be data such as a video or an image from another device. The historical material may correspond to basic information. The basic information includes a photographing time and a photographing address (for example, longitude and latitude information or a place name). When a photographing address of at least one historical material is the same as or similar to the collected current location information (a distance is less than a preset distance threshold), it is determined that the current scene conforms to the old place revisiting theme.

For example, on January 1, 2023, the mobile phone photographs and stores a photo A in Scenic spot A in City A in response to a user operation. Correspondingly, basic information corresponding to the photo A includes a photographing time "January 1, 2023" and a photographing address "Scenic spot A in City A".

On January 3, 2024, historical materials stored in the mobile phone are traversed in response to that the mobile phone is located in City A or Scenic spot A in City A. When the photo A is found, it is determined that the photo A is a historical material whose photographing location is the same as or similar to the current location information. Based on this, the artificial intelligence model may determine that the current scene conforms to the old place revisiting theme.

For example, the mobile phone may recognize, by using the artificial intelligence model and based on current location information collected in real time by the mobile phone and/or pre-configured journey information, that the current scene is a target scene that conforms to the party theme, which is referred to as that the current scene conforms to the party theme.

For example, the pre-configured journey information in the mobile phone indicates to attend Xiaoming's birthday party at 2:00 p.m. on January 3, 2024. When a system time arrives at 2:00 p.m. on January 3, 2024, the artificial intelligence model in the mobile phone may recognize that the current scene conforms to the party theme.

For another example, the user enters a restaurant A with the mobile phone. After the mobile phone collects the current location information, the artificial intelligence model recognizes the restaurant A based on the current location information, and searches for a label of the restaurant A. When the label of the restaurant A includes party-related content, the artificial intelligence model in the mobile phone may recognize that the current scene conforms to the party theme.

For another example, the mobile phone may access a cloud database by using the artificial intelligence model, and query a quantity of users who photographs a material at a current location or near a current location. When the quantity of users exceeds a preset quantity threshold, the artificial intelligence model may recognize that the current scene is a target scene that conforms to the internet-famous spot check-in theme, which may be referred to as that the current scene conforms to the internet-famous spot check-in theme.

Alternatively, the mobile phone may access a cloud database by using the artificial intelligence model, and query media data whose photographing address is the same as or similar to a current location and that is publicly released by the user. If traffic information of the found media data (for example, a quantity of views, a quantity of likes, or a quantity of shares/comments) meets a preset condition (for example, the quantity of views is greater than a preset quantity of views threshold; for another example, the quantity of likes exceeds a preset quantity of likes threshold; and for another example, the quantity of shares/comments is greater than a preset quantity of times), the artificial intelligence model may recognize that the current scene conforms to the internet-famous spot check-in theme.

The foregoing provides only examples. In another embodiment, the artificial intelligence model may alternatively evaluate, based on another rule, whether the current scene conforms to the preset theme. This is not specifically limited in this embodiment of this application.

In some embodiments, when the current scene conforms to the old place revisiting theme, the mobile phone may display a function entry that indicates photographing for check-in. A display form of the function entry may be a card, a notification, a floating capsule, a state capsule, or the like. This is not specifically limited in this embodiment of this application. A display location of the function entry may be a desktop, a leftmost screen, a notification bar, or the like of the mobile phone.

For example, the function entry is used to enable a photographing for check-in function to reach the user. The mobile phone may display guide information in response to an operation performed by the user on the function entry. The guide information may guide the user to operate the mobile phone to photograph the target material that conforms to the old place revisiting theme, and perform photographing for check-in at the current location.

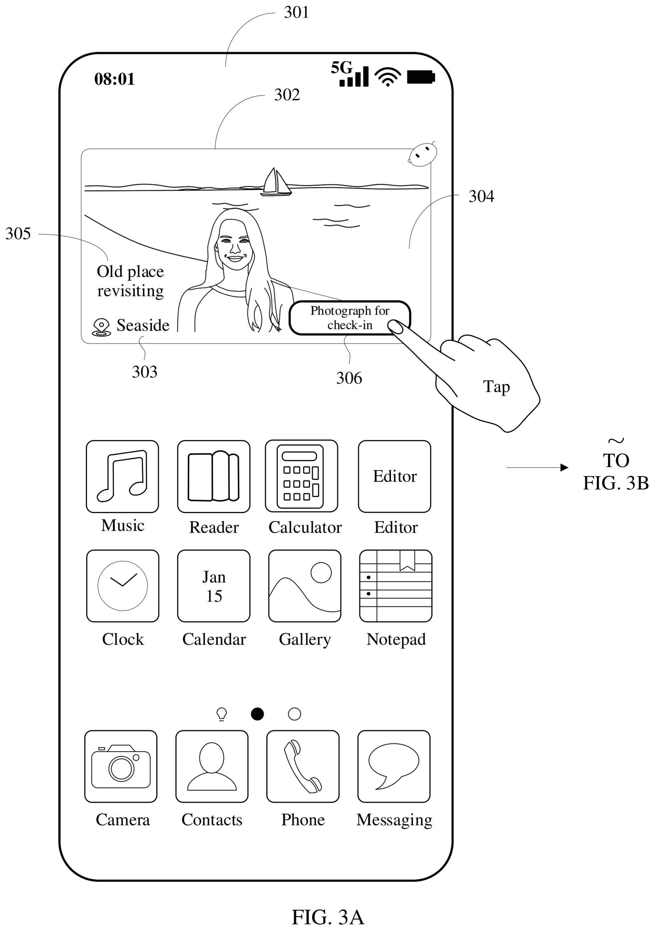

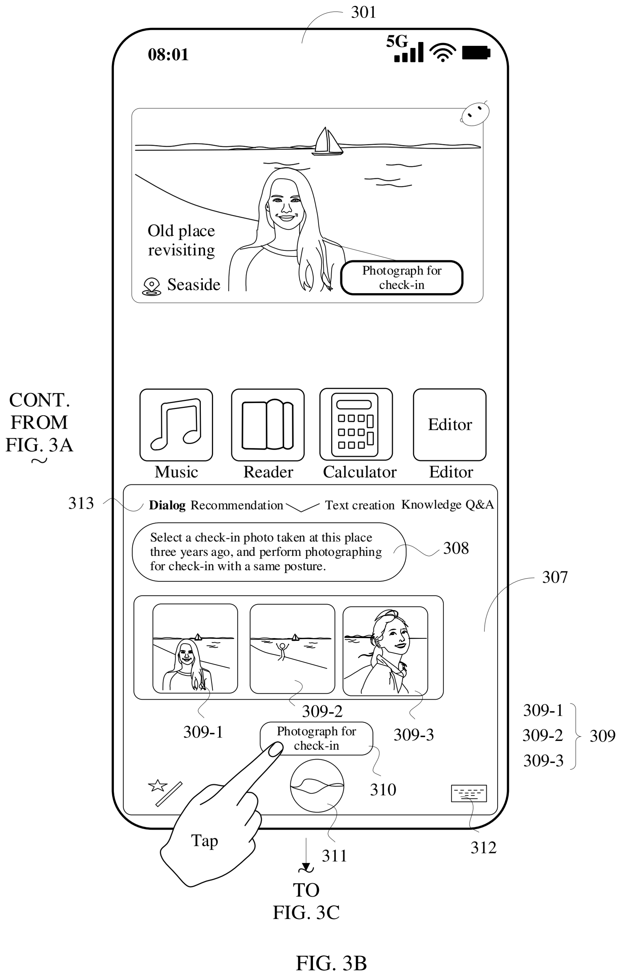

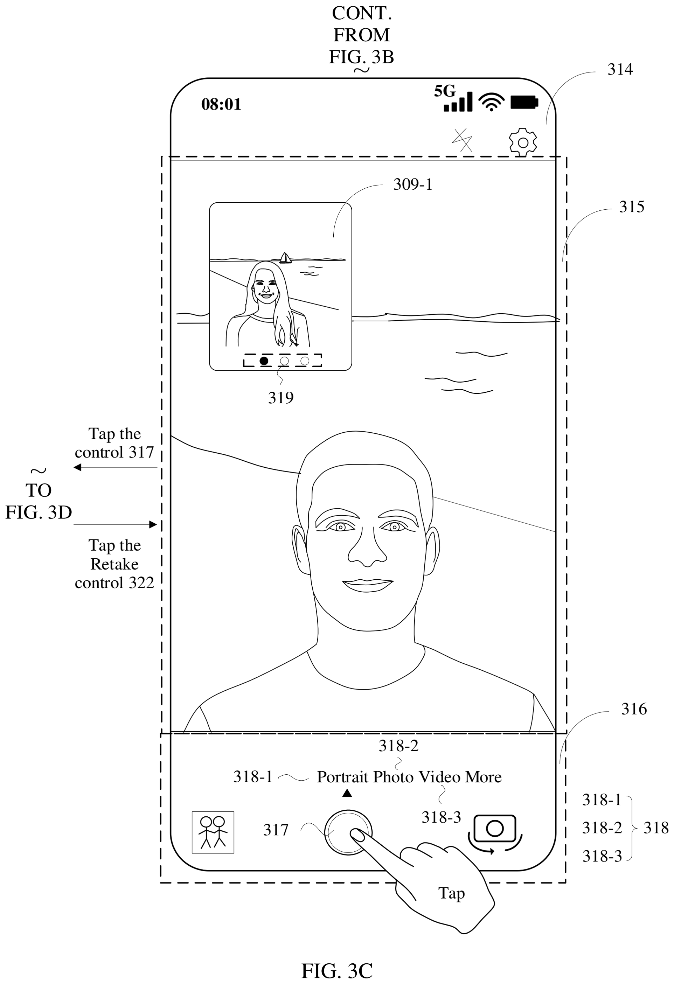

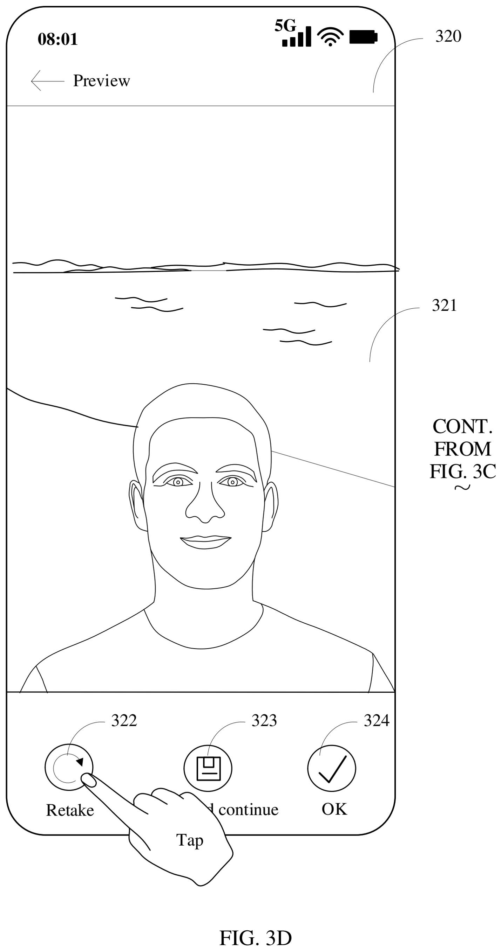

As shown in FIG. 3A to FIG. 3D, when the mobile phone displays a home screen 301 (the desktop), a function card 302, which is referred to as a first card, is displayed on the home screen 301 in response to that the current scene conforms to the old place revisiting theme. In some embodiments, the function card 302 displays content related to the old place revisiting theme, for example, a place name 303, a reference material 304, and a theme name 305.

For example, the place name 303 displayed on the function card 302 is a place name corresponding to the current location information.

For another example, the reference material 304 is from a historical material that meets a condition 1.

It may be understood that the reference material is a sample material recommended by the mobile phone to the user for reference, and the reference material is used as a sample, and may be used to guide the user to photograph the target material that conforms to the old place revisiting theme.

In addition, the condition 1 may be a preconfigured condition related to the old place revisiting theme, and is referred to as a first condition. For example, the condition 1 may include that a photographing address is the same as or similar to current location information (a distance is less than a preset distance threshold). For another example, the condition 1 may include a combination of one or more of the following: a photographing address is the same as or similar to current location information, a photographing time is not a current day (a time interval exceeds a preset time threshold), a person appearing in a material is not an owner (for example, a star), and the like.

It may be understood that a historical material that conforms to the old place revisiting theme may be preliminarily selected based on the condition 1. In this way, the mobile phone may select a reference material related to the old place revisiting theme from the historical material that meets the condition 1.

In an implementation, the reference material may be a material selected based on an aesthetic score from the historical material that meets the condition 1.

It may be understood that the aesthetic score may be aesthetic sense quantization information of image data. For example, the aesthetic score may be a score that corresponds to a historical material and that is comprehensively evaluated by the artificial intelligence module from dimensions such as an underlying aesthetic feature (a feature such as a color, a tone, brightness, and a contrast) and a photographing aesthetic feature (a spatial composition feature, foreground, and a background features, and the like). In an implementation, after obtaining any material, the mobile phone may determine an aesthetic score corresponding to the material by using the artificial intelligence model, and associate the aesthetic score with the material.

In some embodiments, after finding the historical material that meets the condition 1, the mobile phone may arrange, in a descending order of aesthetic scores, the historical material that meets the condition 1. If a quantity of historical materials ranked top N is equal to N, the historical materials ranked top N are used as reference materials. If the quantity of historical materials ranked top N is greater than N, deduplication processing may be further performed on the historical materials ranked top N, and after deduplication, a historical material with a person-centered image and a historical material with a high aesthetic score are preferentially selected as reference materials.

The deduplication processing may be a means of removing a duplicate material. For example, both a historical material a and a historical material b are historical materials that meet the condition 1, a similarity between the historical material a and the historical material b is greater than or equal to a preset similarity threshold, and an aesthetic score of the historical material a is greater than an aesthetic score of the historical material b. After deduplication processing, only the historical material a is retained. It may be understood that the similarity is a quantized value of a similarity between images of the materials, and may be referred to as a similarity evaluation value.

In some other embodiments, after finding the historical material that meets the condition 1, the mobile phone may perform deduplication processing on the historical material that meets the condition 1, and then arrange, in descending order of aesthetic scores, a historical material obtained after deduplication. If a quantity of historical materials ranked top N is equal to N, the historical materials ranked top N are used as reference materials. If the quantity of historical materials ranked top N is greater than N, a historical material with a person-centered image and a historical material with a high aesthetic score are preferentially selected as reference materials.

In some examples, when N is equal to 1, the reference material 304 is a material with a highest aesthetic score in the historical material that meets the condition 1, and the mobile phone may display the reference material 304 on the function card 302. When N is greater than 1, for example, N is equal to 3, the reference material 304 includes materials whose aesthetic scores are ranked top three in the foregoing historical material, and the mobile phone may display the three reference materials 304 on the function card 302 in a carousel manner.

In a possible embodiment, when the mobile phone selects three reference materials, only the reference material with the highest aesthetic score may be displayed on the function card 302. In addition, in response to a sliding operation performed by the user on the function card 302, another reference material may be displayed on the function card 302 through switching.

For another example, the theme name 305 displayed on the function card 302 may be a name that conforms to the preset theme of the current scene, namely, characters "old place revisiting". It may be understood that, when the mobile phone displays another user interface (a leftmost screen, a notification center, a lock screen interface, or the like), the function entry that indicates photographing for check-in may also be displayed on the another user interface in response to that the current scene conforms to the old place revisiting theme, to ensure that the photographing for check-in function can reach the user in a timely manner.

In addition, the function card 302 further includes a control 306. The mobile phone may display an interaction window 307 in response to an operation, for example, a tap operation, performed by the user on the control 306. The user may operate the mobile phone to photograph the target material based on prompt information in the interaction window 307.

As shown in FIG. 3A to FIG. 3D, the interaction window 307 includes a photographing prompt 308, a reference material 309, a check-in control 310, a voice input control 311, and a keyboard input control 312.

In some embodiments, the interaction window 307 may display guide reminder information (for example, the photographing prompt 308) from the mobile phone and instruction content (which is not shown in FIG. 3A to FIG. 3D, where for the instruction content, refer to an identification result 702 in subsequent embodiments) from the user in a form of a dialog. Correspondingly, a dialog control 313 in the interaction window 307 is in a selected state.

In some embodiments, the photographing prompt 308 is used to recommend the user to perform photographing at the current location, for example, is "Select a check-in photo taken at this place three years ago, and perform photographing for check-in with a same pose".

The reference material 309 includes a photo 309-1, a photo 309-2, and a photo 309-3, and is displayed in a first display column. In some embodiments, the photo 309-1, the photo 309-2, and the photo 309-3 are only examples of reference materials selected by the mobile phone, and may include more or fewer reference materials, or reference materials of another theme.

In some embodiments, both the voice input control 311 and the keyboard input control 312 are used to assist the user in giving an instruction to the mobile phone. A difference lies in that the user may give a voice instruction to the mobile phone by using the voice input control 311. The mobile phone may obtain the voice instruction by recognizing content entered by using a user voice. The user taps the keyboard input control 312, and the mobile phone may display a keyboard in an interface. The mobile phone may obtain a text instruction in response to that the user operates the keyboard.

An example in which the user gives an instruction by using the voice input control 311 is used. The mobile phone may wake up a voice assistant function in response to that the user taps the voice input control 311. Certainly, the mobile phone may also wake up the voice assistant function if it is detected that the user says a preconfigured keyword (a preset word, for example, which may be "hello"). A manner of waking up the voice assistant function is not specifically limited in this embodiment of this application.

After the voice assistant function is woken up, the user may indicate, by using the voice instruction, the mobile phone to perform some functions.

For example, the mobile phone may detect an audio signal that is being transmitted in an environment in which the mobile phone is located. After the audio signal (including the voice instruction said by the user) is detected, the mobile phone recognizes and parses the audio signal, to obtain a corresponding recognition result and a corresponding parsing result.

The recognition result may be text content of the voice instruction, and the mobile phone may display the recognition result in the interaction window 307, to prompt the user that the user has given an instruction to the mobile phone. The parsing result includes a function indicated by semantics of the voice instruction, and the mobile phone may execute, based on the parsing result, the function indicated by the voice instruction.

For example, the user says a voice instruction "Photograph for check-in" to the mobile phone. The mobile phone may start the voice assistant function. After the voice assistant function is started, the mobile phone may collect the audio signal, for example, collect an audio signal that includes "Photograph for check-in". Then, the mobile phone may recognize and parse the collected audio signal by using the artificial intelligence model.

Based on the audio signal, it may be learned that the recognition result of the voice instruction said by the user is a text "Photograph for check-in". Based on the audio signal, semantics obtained through parsing may be associated with a photographing function. In addition, with reference to that a reference material recommended to the user most recently is related to "old place revisiting theme", the mobile phone may determine that the parsing result is that the voice instruction indicates a photographing function corresponding to "old place revisiting theme". Correspondingly, the mobile phone may start the photographing function corresponding to "old place revisiting theme". After the photographing function corresponding to "old place revisiting theme" is started, the mobile phone may guide the user to photograph the target material that conforms to "old place revisiting theme" For example, after the photographing function corresponding to "old place revisiting theme" is started, the mobile phone may display a photographing interface 314. For specific details, refer to descriptions in subsequent embodiments.

It may be understood that another preset theme may also correspond to a dedicated photographing function. The dedicated photographing function may also guide the user to photograph a target material that matches the another preset theme. When enabling a dedicated function of the another preset theme, the mobile phone may further display the photographing interface corresponding to the another preset theme.

Another example in which the user gives an instruction by using the keyboard input control 312 is used. In response to an operation performed by the user on the keyboard input control 312, the mobile phone may enter an instruction in a form of a text, which is briefly referred to as a text instruction. For example, if the user enters a text "Photograph for check-in", the mobile phone may determine that the user gives a text instruction "Photograph for check-in", and then, the mobile phone parses the text instruction, to obtain a corresponding parsing result. For example, it is determined that semantics of the text instruction is associated with the photographing function. In addition, with reference to that a reference material recommended to the user most recently is related to "old place revisiting theme", the mobile phone may determine that the parsing result is that the text instruction indicates a photographing function corresponding to "old place revisiting theme". Correspondingly, the mobile phone may start the photographing function corresponding to "old place revisiting theme", and display the photographing interface 314.

The foregoing provides only an example in which the user gives the instruction "Photograph for check-in" to the mobile phone by using the voice input control 311 and the keyboard input control 312. The user may further give another instruction, for example, a reference material addition/deletion instruction or a media data generation instruction, to the mobile phone by using the voice input control 311 and the keyboard input control 312. For details, refer to subsequent embodiments. Details are not described herein.

In some embodiments, the check-in control 310 is a start interface of the photographing function corresponding to "old place revisiting theme", and may also be referred to as a first control. As shown in FIG. 3A to FIG. 3D, in response to that the user taps the check-in control 310, the mobile phone may start the photographing function corresponding to "old place revisiting theme", and display the photographing interface 314.

The mobile phone may display the photographing interface 314 in response to that the user taps the check-in control 310, in response to that the voice instruction "Photograph for check-in" is detected, or in response to that the text instruction "Photograph for check-in" is received.

As shown in FIG. 3A to FIG. 3D, the photographing interface 314 includes a collection preview area 315 and a photographing operation area 316. The collection preview area 315 is used to present a preview stream collected in real time by a camera. The preview stream includes image frames continuously collected by the camera.

As shown in FIG. 3A to FIG. 3D, a reference material is displayed in the collection preview area 315. The reference material is displayed in the collection preview area 315 in a picture-in-picture form or in a small window form. A location of the reference material in the collection preview area 315 is not specifically limited, and may be an upper area shown in the figure, or may be located in a corner area, or the like. When there are a plurality of reference materials, for example, including the photo 309-1, the photo 309-2, and the photo 309-3, one of the photo 309-1, the photo 309-2, and the photo 309-3 may be displayed in the collection preview area 315. As shown in FIG. 3A to FIG. 3D, the photo 309-1 is displayed. The photographing interface 314 in which the photo 309-1 (for example, which is referred to as a first material) is displayed may be referred to as a first interface.

In addition, the mobile phone displays a navigation point 319 for the photo 309-1. A quantity of navigation points 319 is the same as a quantity of reference materials, and each navigation point 319 corresponds to one reference material. As shown in FIG. 3A to FIG. 3D, when the photo 309-1 is displayed in the collection preview area 315, a navigation point corresponding to the photo 309-1 is in a selected state.

In some embodiments, the mobile phone may start a Gallery application in response to that the user taps a reference material in the collection preview area 315, and display the tapped reference material in an application interface provided by the Gallery application. In some embodiments, the mobile phone may newly display a layer of mask in response to that the user taps a reference material in the collection preview area 315, and display a tapped reference material on the mask.

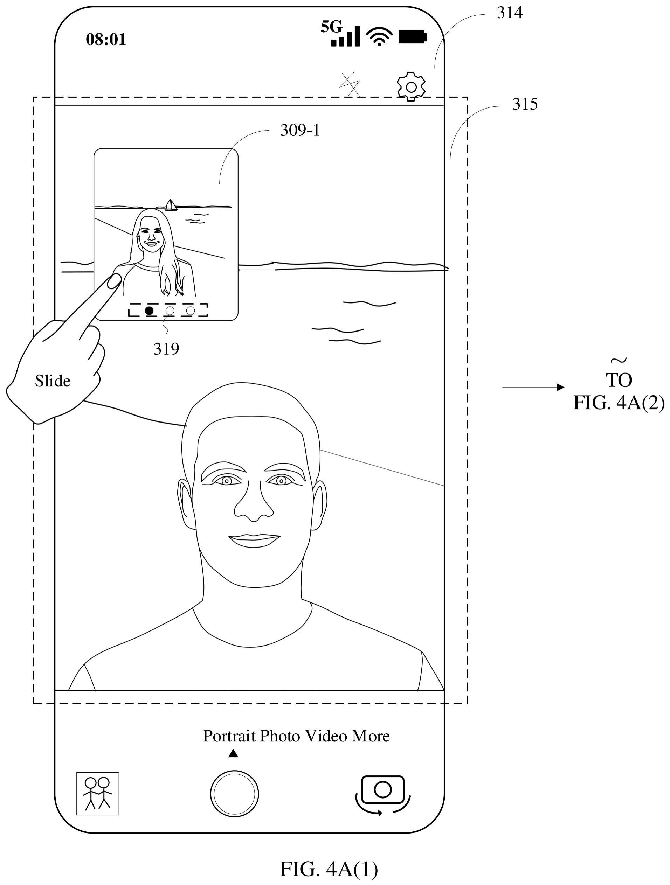

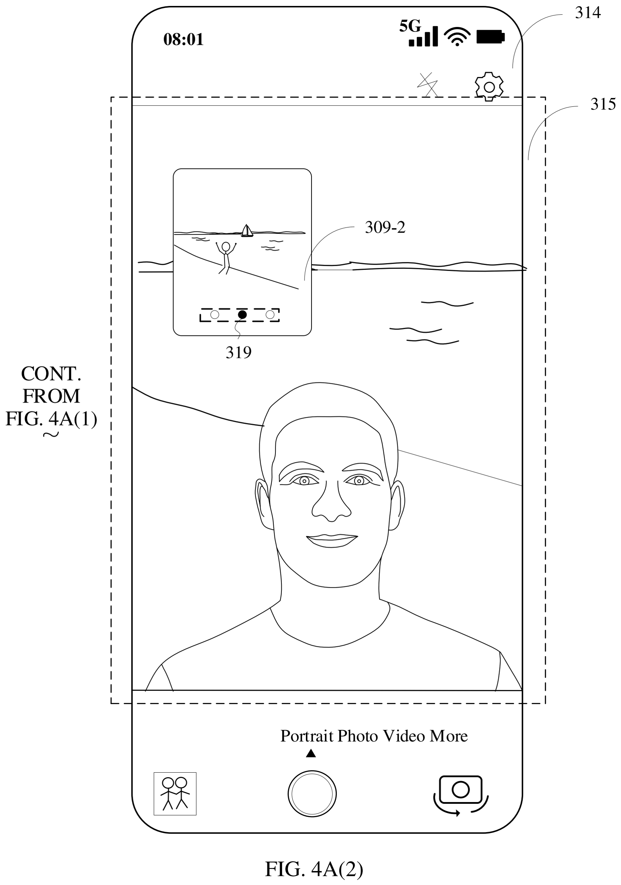

In addition, as shown in FIG. 4A(1) and FIG. 4A(2), the mobile phone may switch to display the photo 309-2 in the collection preview area 315 in response to a sliding operation performed by the user on the photo 309-1 in the collection preview area 315. Correspondingly, a selected sate of a navigation point corresponding to the photo 309-1 is canceled, and a navigation point of the photo 309-2 is in a selected state. The photographing interface 314 in which the photo 309-2 (for example, which is referred to as a second material) is displayed may be referred to as a second interface.

A control 317 that indicates photographing and a configuration item 318 that indicates a photographing mode are displayed in the photographing operation area 316. The configuration item 318 includes a configuration item 318-1 that indicates a portrait mode, a configuration item 318-2 that indicates a photo mode, and a configuration item 318-3 that indicates a video mode. It may be understood that cameras supported by different photographing modes and camera parameters that need to be configured may be different. In addition, a type of the photographing mode is only an example, and may further include another photographing mode. This is not specifically limited herein.

In some embodiments, if it is specified in advance that a material related to the old place revisiting theme is a photo, correspondingly, all the selected reference materials are photos. In this example, after the mobile phone starts the photographing function related to the old place revisiting theme, the configuration item 318-1 that indicates the portrait mode is in a selected state in the displayed photographing interface 314, and the mobile phone may collect a preview stream based on the portrait mode. Alternatively, after the mobile phone starts the photographing function related to the old place revisiting theme, the configuration item 318-2 that indicates the photo mode is in a selected state in the displayed photographing interface 314, and the mobile phone collects a preview stream based on the photo mode. This is not specifically limited in this embodiment of this application.

For example, when the photographing function related to the old place revisiting theme is started, the portrait mode is enabled by default. Correspondingly, the configuration item 318-1 is in the selected state. When the portrait mode is enabled, the mobile phone displays, in the collection preview area 315, a preview stream collected in real time based on the portrait mode. It may be understood that, that the portrait mode is enabled by default is only an example. In another embodiment, the photo mode may also be enabled by default. This is not specifically limited.

For another example, when most photos in reference materials are person-centered photos, and the photographing function related to the old place revisiting theme is started, the portrait mode is enabled, and correspondingly, the configuration item 318-1 is in the selected state.

For another example, when most photos in reference materials are object-centered photos or scene-centered photos, and the photographing function related to the old place revisiting theme is started, the photo mode is enabled, and correspondingly, the configuration item 318-2 is in the selected state. When the photo mode is enabled, the mobile phone displays, in the collection preview area 315, a preview stream collected in real time based on the photo mode.

For another example, if the reference material displayed in the photographing interface 314 is a person-centered photo, the configuration item 318-1 is in the selected state. If the reference material displayed in the photographing interface 314 is an object-centered photo or a scene-centered photo, the configuration item 318-2 is in the selected state.

In an implementation, before the photographing interface 314 is displayed, the mobile phone may determine a sequence (referred to as a recommendation sequence) of recommending the foregoing reference material to the user. For example, the mobile phone may arrange recommendation sequences of all reference materials in ascending order of distances between photographing addresses of the reference materials and the current location. For another example, the mobile phone arranges recommendation sequences of all reference materials in ascending order of photographing times of the reference materials. For another example, the mobile phone arranges recommendation sequences of all reference materials in descending order of aesthetic scores of the reference materials.

After the photographing interface 314 is displayed, a reference material a is displayed in the photographing interface 314, and the reference material a is a reference material arranged the first based on the recommendation sequence. If the reference material a is a person-centered photo, the configuration item 318-1 is in the selected state. If the reference material a is a person-centered photo, an object-centered photo, or a scene-centered photo, the configuration item 318-2 is in the selected state.

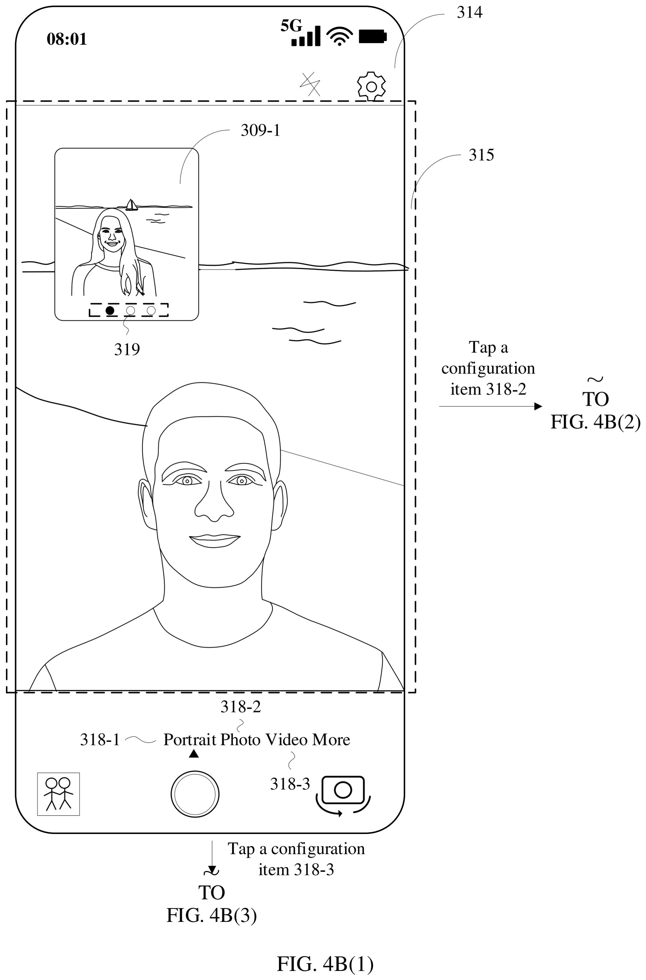

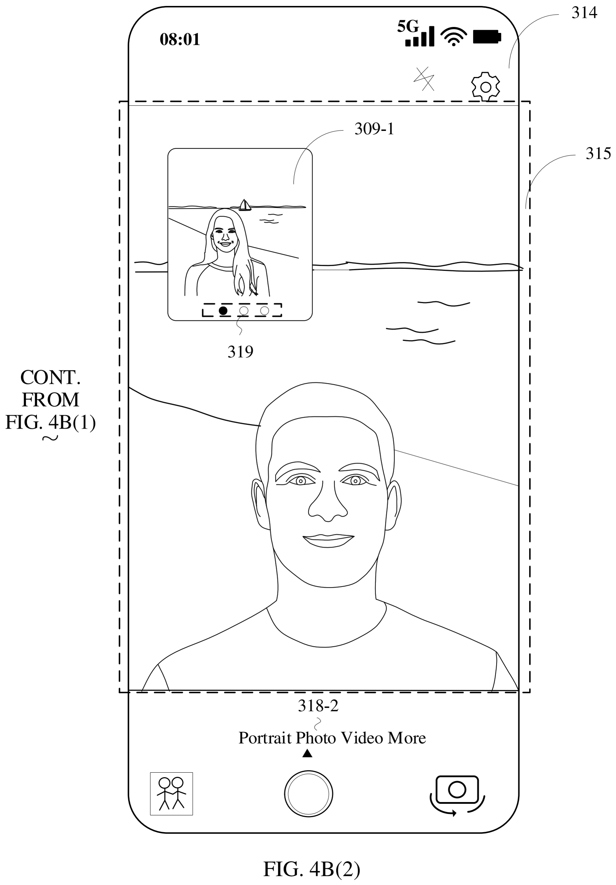

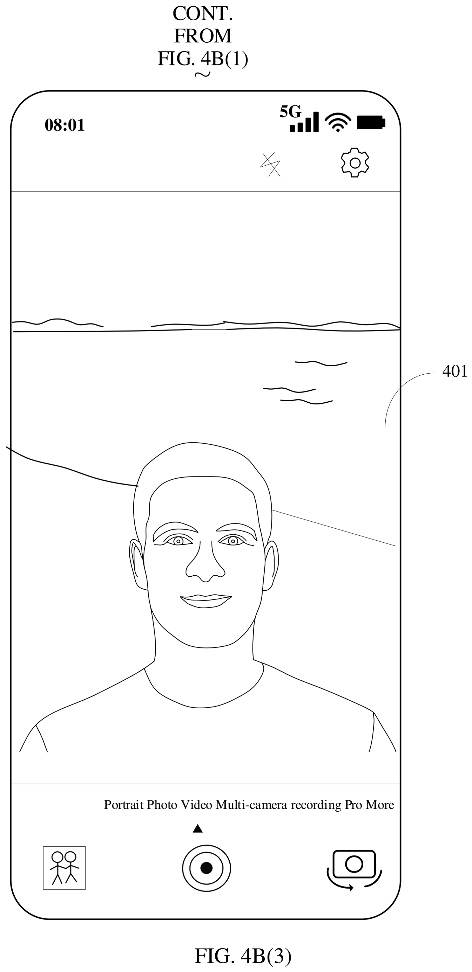

In addition, the user may further manually switch the photographing mode. As shown in FIG. 4B(1) to FIG. 4B(3), when the configuration item 318-1 in the photographing interface 314 is in the selected state, the mobile phone may switch the portrait mode to the photo mode in response to that the user taps the configuration item 318-2.

It may be understood that cameras supported by different modes and/or required camera parameters may be different. A process of switching the portrait mode to the photo mode may include changing a started camera, changing a camera parameter, and/or the like. For specific details, refer to a related technology. Details are not described herein again.

As shown inFIG. 4B(1) to FIG. 4B(3), after the portrait mode is switched to the photo mode, the mobile phone continues to display the photographing interface 314. In the photographing interface 314, the configuration item 318-1 is set to an unselected state, and the configuration item 318-2 is set to the selected state. In the photographing interface 314, a preview stream collected in the photo mode is displayed in the collection preview area 315. In addition, a reference material (for example, the photo 309-1) is still displayed in a floating manner in the collection preview area 315.

If it is specified in advance that all materials related to the old place revisiting theme are photos, still as shown inFIG. 4B(1) to FIG. 4B(3), a configuration item 318-1 in the photographing interface 314 is in the selected state, and in response to that the user taps the configuration item 318-3, the photographing function corresponding to the old place revisiting theme is triggered to exit, to stop photographing the target material related to the old place revisiting theme, and start the video function provided by the camera application. In addition, in response to that the user taps the configuration item 318-3, the mobile phone may further display a video preview interface 401. The video preview interface 401 is an application interface corresponding to the video function. The video preview interface 401 displays a preview stream collected in a recording mode. In addition, the video preview interface 401 displays no reference material.

It may be understood that, after the photographing function corresponding to the old place revisiting theme is exited, in response to an operation performed by the user in the video preview interface 401, the mobile phone may photograph a conventional material. For details, refer to a photographing function provided by a camera application in a related technology.

In addition, in a possible embodiment, when the mobile phone switches a reference material displayed in the photographing interface 314, the photographing mode may also change with a type of a switched reference material. The type of the reference material may include a person-centered photo and an object-centered photo or a scene-centered photo.

After the reference material displayed in the photographing interface 314 is switched from the person-centered photo to the object-centered photo or the scene-centered photo, the photographing mode may be switched from the portrait mode to the photo mode. Correspondingly, the configuration item 318-2 is set to the selected state. Similarly, after the reference material displayed in the photographing interface 314 is switched from the object-centered photo or the scene-centered photo to the person-centered photo, the photographing mode may be switched from the photo mode to the portrait mode. Correspondingly, the configuration item 318-1 is set to the selected state.

Certainly, if a type of a material related to the old place revisiting theme is not limited in advance, the type of the reference material may further include a video. After the mobile phone starts the photographing function related to the old place revisiting theme, one of the configuration item 318-1, the configuration item 318-2, or the configuration item 318-3 in the displayed photographing interface 314 is in the selected state. In other words, the mobile phone may collect the preview stream in the portrait mode, the photo mode, or the video mode. For a specific example, refer to the foregoing embodiments. Details are not described herein. In addition, in response to an operation that the user switches the photographing mode, the mobile phone does not trigger the photographing function corresponding to the old place revisiting theme.

In some embodiments, when the mobile phone does not exit the photographing function corresponding to the old place revisiting theme, the displayed photographing interface includes a reference material, and the user may adjust a framed image and a posture of a photographed object with reference to the reference material displayed in the photographing interface 314, and operate the mobile phone to collect the target material.

When the enabled photographing mode is the portrait mode or the photo mode, as shown in FIG. 3A to FIG. 3D, the mobile phone may collect one frame of image in response to that the user taps the control 317, and use the frame of image as a target material corresponding to a 1^{st} reference material. An operation of tapping the control 317 may be referred to as a first operation. Then, the mobile phone displays a material preview interface 320, and the material preview interface 320 displays a currently collected target material, for example, displays a photo 321.

It may be understood that, when the photographing mode is the video mode, for a process of photographing the target material, refer to a conventional process of recording a video. After an operation performed by the user to indicate to stop recording, it is determined that the target material corresponding to the 1^{st} reference material is collected. Then, the mobile phone displays a material preview interface 320, and the material preview interface 320 displays a currently collected target material.

In addition, when the quantity of reference materials is N (a value of N is greater than 1), after a target material corresponding to an M^{th} reference material is collected, if M is a positive integer less than N, the displayed material preview interface includes a Retake control 322, a Save control 323, and an OK control 324.

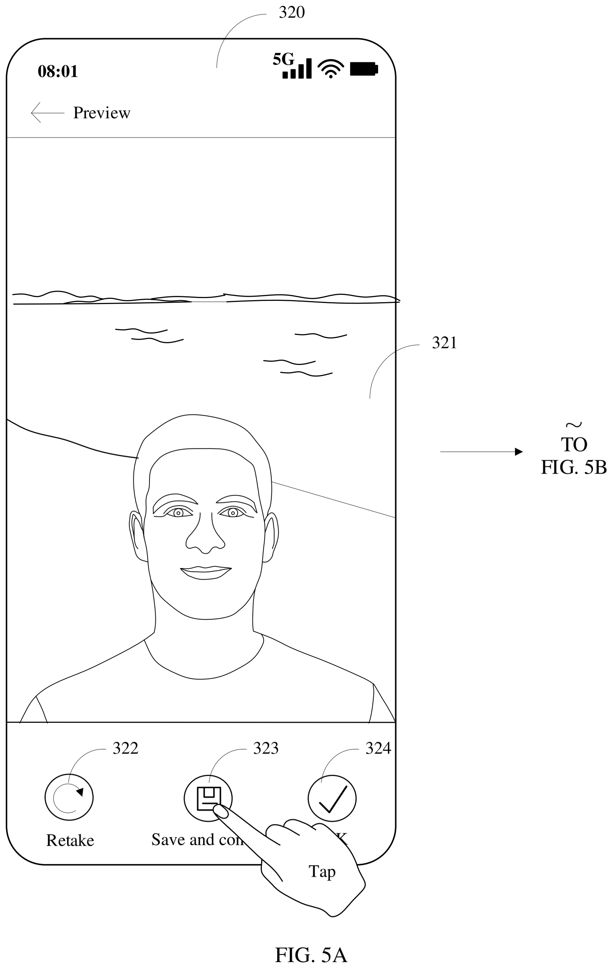

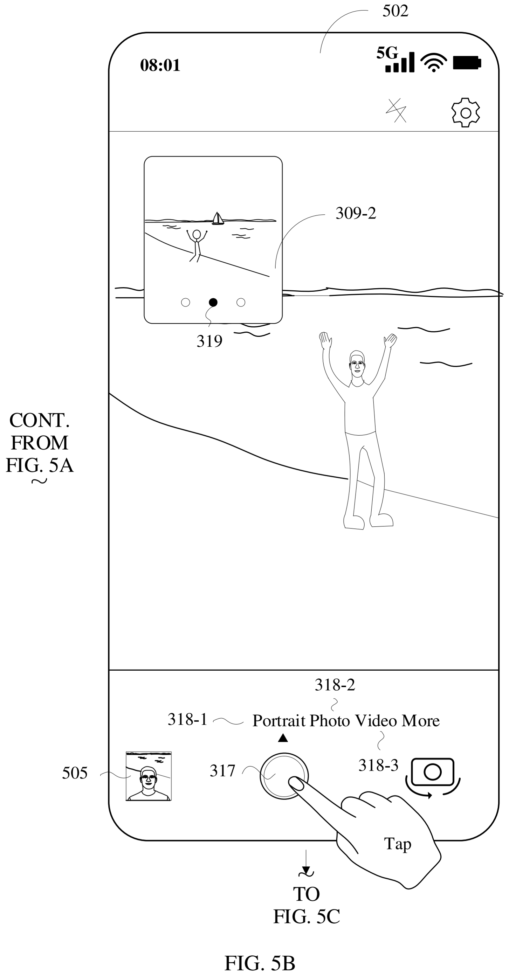

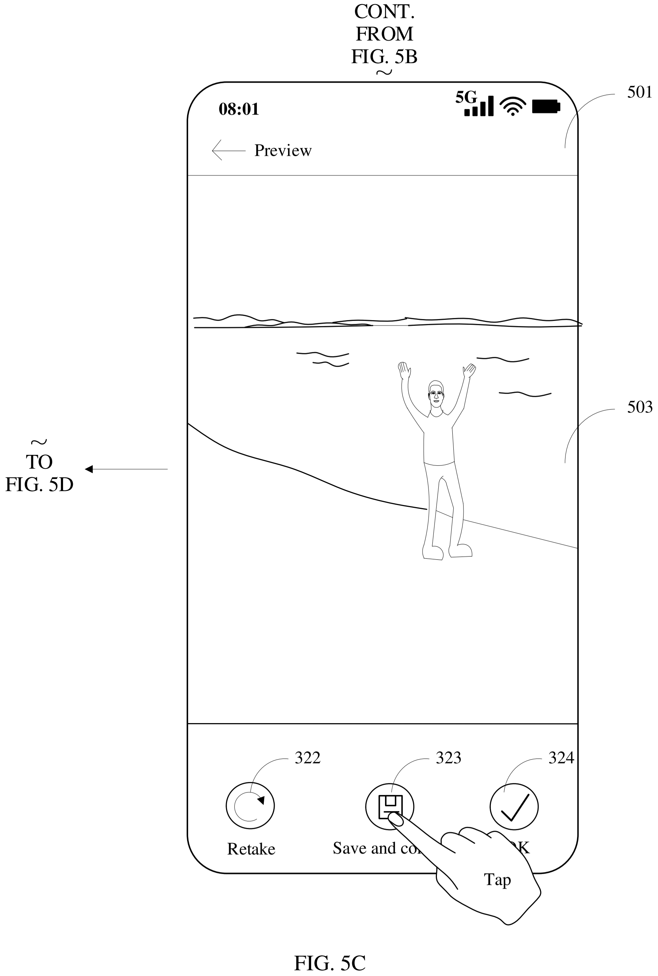

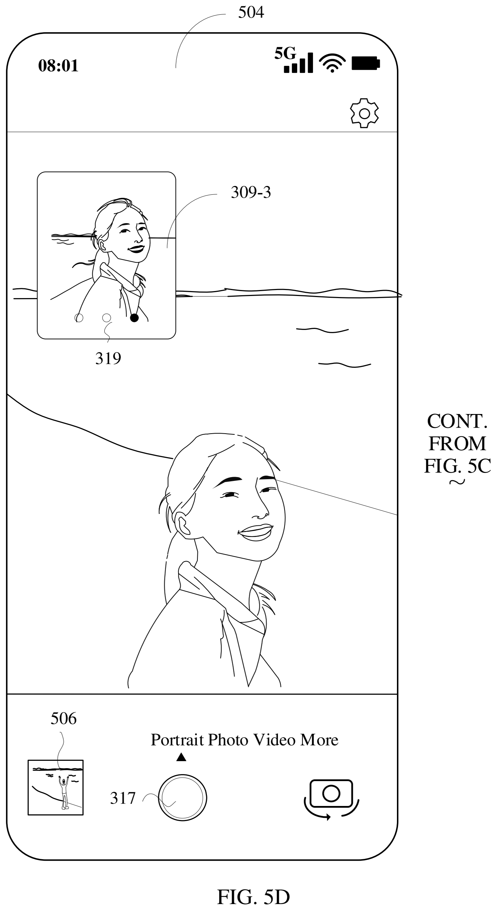

For example, the quantity of reference materials is 3. After the target material (photo 321) corresponding to the 1^{st} reference material is collected, as shown in FIG. 3A to FIG. 3D, the displayed material preview interface 320 includes a Retake control 322, a Save control 323, and an OK control 324. For another example, the quantity of reference materials is 3. After a target material (for example, a third material) corresponding to a 2^{nd} reference material is collected, as shown in FIG. 5A to FIG. 5D, a displayed material preview interface 501 also includes a Retake control 322, a Save control 323, and an OK control 324.

As shown in FIG. 3A to FIG. 3D, when the material preview interface 320 is displayed, the photographing interface 314 may be re-displayed in response to that the user taps the Retake control 322, and the reference material displayed in the photographing interface 314 remains unchanged, for example, is still the photo 309-1, and it is prompted that the user needs to collect the target material corresponding to the 1^{st} reference material again. In addition, the photographing mode enabled by the mobile phone remains unchanged.

Then, after the mobile phone collects the target material corresponding to the 1^{st} reference material again in response to a user operation, the material preview interface 320 may be re-displayed. The material preview interface 320 may display the target material corresponding to the 1^{st} reference material that is collected again. Similarly, the re-displayed material preview interface 320 also includes a Retake control 322, a saving control 323, and a completing control 324.

In addition, as shown in FIG. 5A to FIG. 5D, when the material preview interface 320 is displayed, the user saves the 1^{st} target material in response to that the user taps the Save control 323, and displays the photographing interface 502. For example, the 1^{st} target material (photo 321) may be stored in Gallery. Correspondingly, a thumbnail of the photo 321 is displayed in the photographing interface 502.

The same as the photographing interface 314, the photographing interface 502 has a collection preview area and a photographing operation area, and a control 317 that indicates photographing is included in the photographing operation area.

The photographing interface 502 is different from the photographing interface 314 in that the photographing interface 502 displays a different reference material. For another example, the reference material displayed in the photographing interface 314 is a reference material whose recommended sequence is the M^{th}, and the reference material displayed in the photographing interface 502 is a reference material whose recommended sequence is the (M+1)^{th}.

In the examples in FIG. 3A to FIG. 3D and FIG. 5A to FIG. 5D, a value of M is 1. As shown in FIG. 3A to FIG. 3D and FIG. 5A to FIG. 5D, the photographing interface 314 displays the photo 309-1, and the photographing interface 502 displays the photo 309-2. In addition, in the photographing interface 314, the navigation point displayed for the photo 309-1 is in the selected state in the navigation point 319 displayed for the reference material; and in the photographing interface 502, the navigation point corresponding to the photo 309-2 is in the selected state in the navigation point 319 displayed for the reference material. In a possible embodiment, in response to a left sliding operation performed by the user on the photo 309-2, switching may be performed to display the photo 309-3. In response to a right sliding operation performed by the user on the photo 309-2, switching may be performed again to display the photo 309-1. In this way, a plurality of corresponding target materials may be collected with reference to a same reference material in response to a user operation.

In some examples, when the mobile phone switches to display the photographing interface 502, the photographing mode remains unchanged. For example, after the mobile phone collects and stores the 1^{st} target material in the portrait mode, the mobile phone continues to collect a preview stream in the portrait mode in response to that the photographing interface 502 is displayed. Correspondingly, the configuration item 318-1 in the photographing interface 502 is still in the selected state.

In another example, when the mobile phone switches to display the photographing interface 502, the enabled photographing mode may change with a type of the reference material displayed in the photographing interface 502. For example, the reference material displayed in the photographing interface 502 is a person-centered photo, and the portrait mode is enabled to collect a preview stream. Correspondingly, the configuration item 318-1 in the photographing interface 502 is in the selected state. The reference material displayed in the photographing interface 502 is an object-centered photo or a scene-centered photo, and the photographing mode is enabled to collect a preview stream. Correspondingly, the configuration item 318-2 in the photographing interface 502 is in the selected state. The reference material displayed in the photographing interface 502 is a video, and the video mode is enabled to collect a preview stream. Correspondingly, the configuration item 318-3 in the photographing interface 502 is in the selected state.

Certainly, after the photographing interface 502 is displayed, the user may manually switch the photographing mode. For details, refer to switching the photographing mode in the photographing interface 314. Details are not described herein again.

For example, the configuration item 318-1 in the photographing interface 502 is in the selected state. When the photographing interface 502 is displayed, the mobile phone collects one frame of image in response to that the user taps the control 317 in the photographing interface 502, and uses the one frame of image as the target material corresponding to the 2^{nd} reference material. Then, the mobile phone displays the material preview interface 501, and the material preview interface 501 displays a currently collected target material, for example, displays a photo 503. The material preview interface 501 may also be referred to as a sixth interface.

As described in the foregoing embodiments, the quantity of reference materials is 3. After the target material corresponding to the second reference material is collected, the material preview interface 501 also displays the Retake control 322, the Save control 323 (third control), and the OK control 324 (second control).

As shown in FIG. 5A to FIG. 5D, when the material preview interface 501 is displayed, the target material (photo 503) corresponding to the second reference material (photo 309-2) is stored in Gallery in response to that the user taps the Save control 323, which is referred to as, for example, a third operation. In addition, the photographing interface 504, which is referred to as, for example, a fourth interface, may be further displayed in response to that the user taps the Save control 323. The photographing interface 504 includes a thumbnail 506 of the photo 503, and an application interface provided by the Gallery application may be displayed in response to that the user taps the thumbnail 506. The application interface includes the photo 503.

The same as the photographing interface 502, the photographing interface 504 has a collection preview area and a photographing operation area, and the control 317 that indicates photographing is included in the photographing operation area.

The photographing interface 504 is different from the photographing interface 502 in that the photographing interface 504 displays a different reference material. In addition, the reference material displayed in the photographing interface 504 is also different from the reference material displayed in the photographing interface 314.

For example, the reference material displayed in the photographing interface 314 is a reference material whose recommendation sequence is the M^{th}, the reference material displayed in the photographing interface 502 is a reference material whose recommendation sequence is the (M+1)^{th}, which is referred to as, for example, a second material, and the reference material displayed in the photographing interface 504 is a reference material whose recommendation sequence is the (M+2)^{th}, which is referred to as, for example, a fourth material. In some examples, when the mobile phone switches to display the photographing interface 504, the photographing mode remains unchanged. For example, after the mobile phone collects and stores the 3^{rd} target material in the portrait mode, the mobile phone continues to collect a preview stream in the portrait mode in response to that the photographing interface 504 is displayed. Correspondingly, the configuration item 318-1 in the photographing interface 504 is still in the selected state.

In another example, when the mobile phone switches to display the photographing interface 504, the enabled photographing mode may change with a type of the reference material (for example, the photo 309-3) displayed in the photographing interface 504.

In some embodiments, a quantity of target materials that the user is guided to collect is the same as a quantity of reference materials. For example, when the quantity of reference materials is N (the value of N is greater than or equal to 1), after corresponding target materials are photographed with reference to N different reference materials 309, a material preview interface used to display the target materials includes the Retake control 322 and the OK control 324.

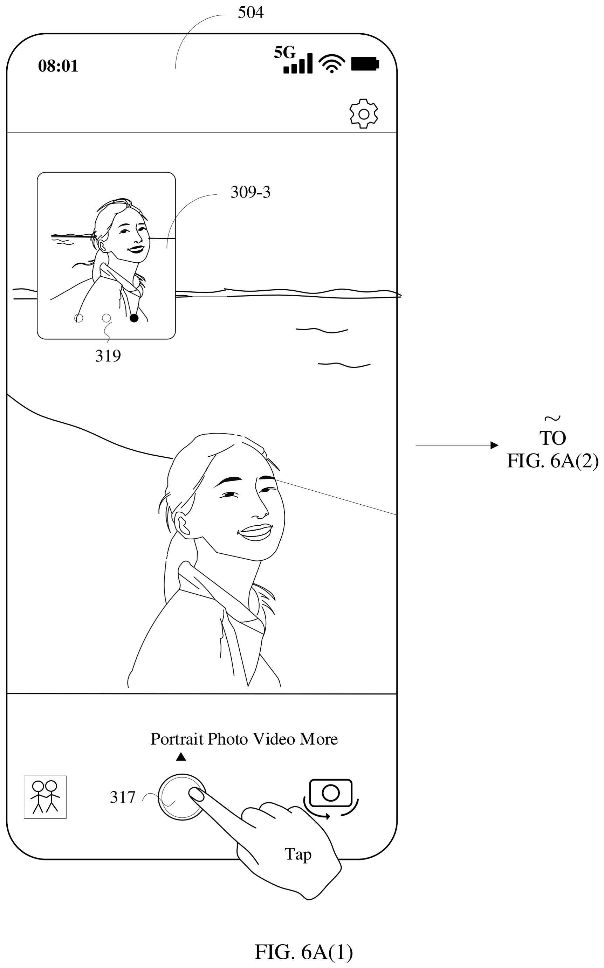

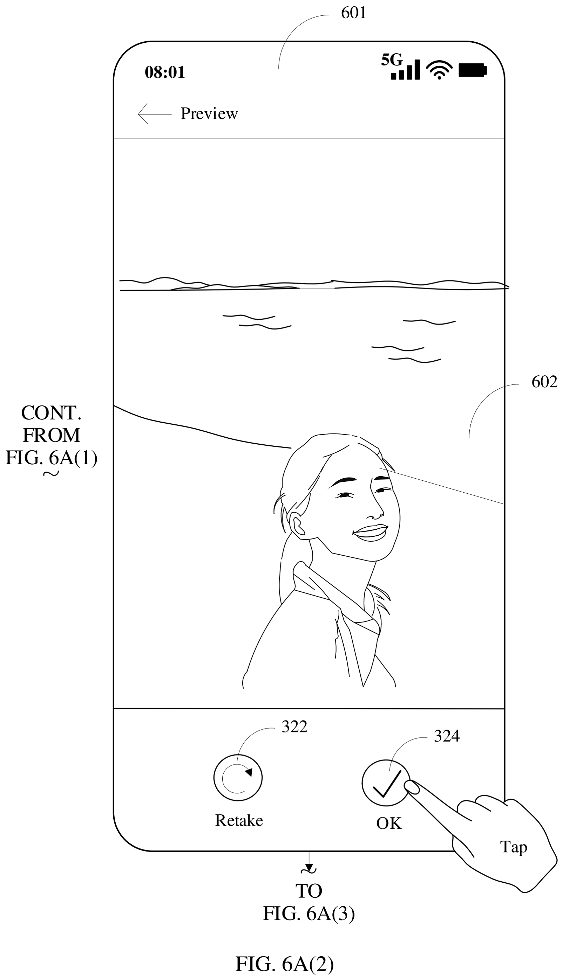

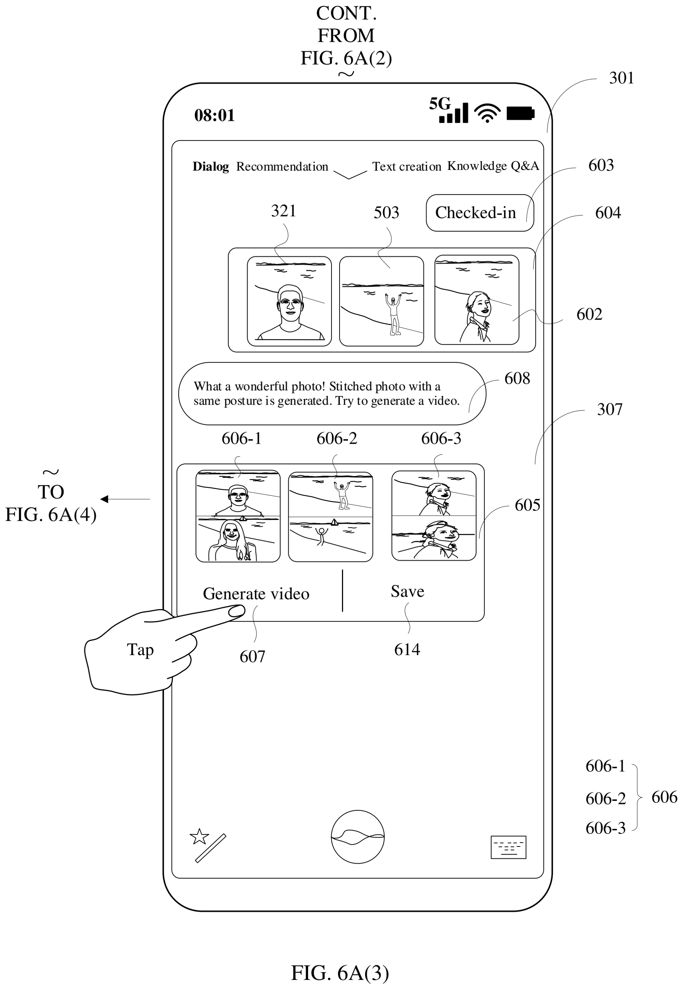

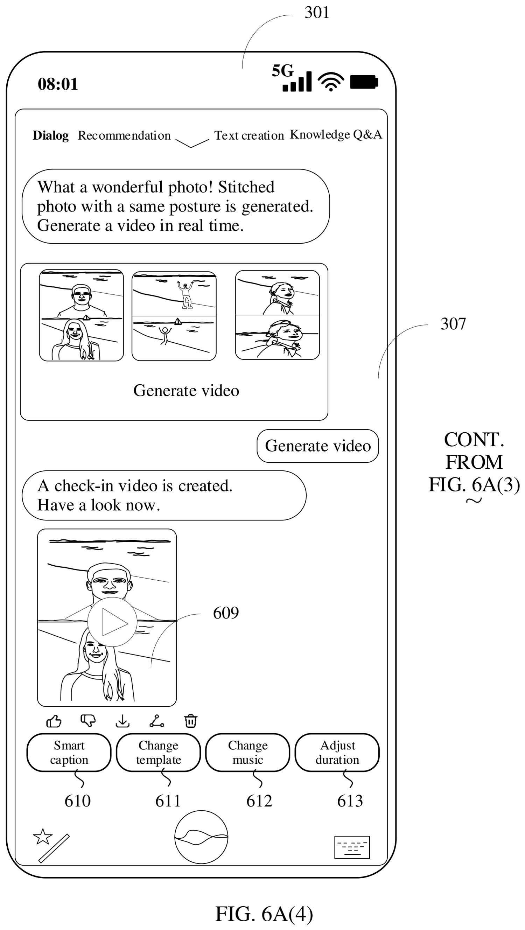

For example, as shown in FIG. 6A(1) to FIG. 6A(4), when the photographing interface 504 is displayed, the mobile phone collects one frame of image in response to that the user taps the control 317 in the photographing interface 504, and uses the one frame of image as a target material corresponding to a 3^{rd} reference material, which is referred to as, for example, a fifth material. Then, the mobile phone displays a material preview interface 601, and the material preview interface 601 displays a currently collected target material, for example, displays a photo 602. When the quantity of reference materials is 3 and the target material corresponding to the third reference material is collected, as shown in FIG. 6A(1) to FIG. 6A(4), the material preview interface 601 displays the Retake control 322 and the OK control 324.

In some embodiments, as shown in FIG. 6A(1) to FIG. 6A(4), the mobile phone may display the home screen 301 in response to that the user taps the OK control 324. Tapping the OK control 322 may be referred to as a second operation. The interaction window 307 is displayed on the home screen 301, and prompt information 603 is newly displayed in the interaction window 307. For example, the prompt information 603 is a text "Checked-in". The home screen 301 on which the interaction window 307 is displayed may be referred to as a third interface.

In some scenarios, the user may select, in the photographing interface by using a sliding operation on a reference material, a reference material used for reference; and after photographing, ends photographing by tapping the OK control in the material preview interface.

In addition, a dialog box 604 is further added in the interaction window 307, and a collected target material is displayed in the dialog box 604. In some embodiments, a quantity of target materials displayed in the dialog box 604 is the same as a quantity of actually collected target materials. Some target materials may be hidden if all target materials cannot be displayed in the dialog box 604. As shown in FIG. 6A(1) to FIG. 6A(4), when collection of the 3^{rd} target material is completed, the photo 321, the photo 503, and the photo 602 may be displayed in the dialog box 604.

It may be understood that when the mobile phone displays the material preview interface 320, that is, when the mobile phone collects only the 1^{st} target material, the home screen 301 including the interaction window 307 may also be displayed in response to that the user taps the OK control 324. In this scenario, only the photo 321 (the 1^{st} target material) is displayed in the dialog box 604 newly added in the interaction window 307. When the mobile phone displays the material preview interface 501, that is, when the mobile phone has collected the 2^{nd} target material, the home screen 301 including the interaction window 307 may also be displayed in response to that the user taps the OK control 324. In this scenario, the photo 321 (1^{st} target material) and the photo 503 (2^{nd} target material) are displayed in the dialog box 604 in the interaction window 307.

S102: The mobile phone creates, based on the target material and the reference material, the media data that conforms to the old place revisiting theme.

In some embodiments, after collection of the target material is completed, the mobile phone may generate one or more pieces of stitched data based on the target material and the reference material. The stitched data may be data obtained by stitching the target material and the reference material.

For example, after detecting that the user taps the OK control 324, the mobile phone may determine, in the reference material, an associated material corresponding to each target material. The mobile phone may generate corresponding stitched data based on the target material and the corresponding associated material, for example, first stitched data generated based on the second material (the reference material) and the third material (the target material).

In an implementation, the associated material may be a reference material that has a highest image content similarity with the target material and that is evaluated by the artificial intelligence model. When the target material is a person-centered photo, if there is a higher similarity between a person posture appearing in the target material and a person posture appearing in the reference material, the mobile phone evaluates a higher image content similarity between the target material and the reference material.

In another implementation, the associated material may also be a reference material displayed when the user is guided to photograph the target material. For example, as shown in FIG. 3A to FIG. 3D, when the photographing interface 314 displays the photo 309-1, the mobile phone photographs the photo 321 in response to a user operation. In this scenario, the photo 309-1 may be referred to as an associated material of the photo 321. In this embodiment of this application, a manner of determining the associated material is not specifically limited, and may be another manner.

A manner in which the mobile phone generates corresponding stitched data after determining an associated material of each target material includes: The mobile phone stitches each target material and the corresponding associated material in a left-right layout form, an up-down layout form, a picture-in-picture layout form, or the like, to obtain the stitched data corresponding to each target material.

It may be understood that when both the target material and the associated material are images, the stitched data is a stitched image, for example, a stitched photo 606-1 in FIG. 6A(1) to FIG. 6A(4).

It may be understood that when both the target material and the associated material are videos, the stitched data may be a stitched video.

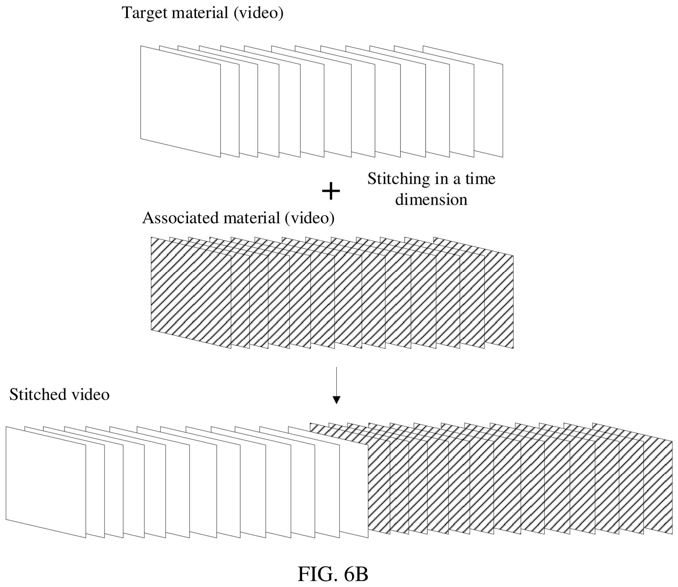

The stitched video may be video data generated by stitching the target material and the associated material in a time dimension. For example, as shown in FIG. 6B, a transition special effect is used to connect the target material and the associated material, to generate the corresponding stitched video. In the generated stitched video, a playback time of a video frame from the target material is earlier than (or is later than) that of a video frame from the associated material.

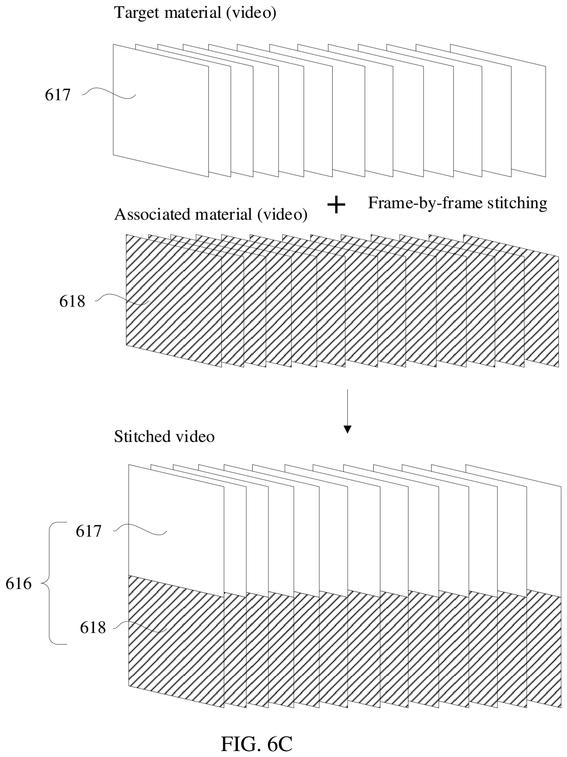

The stitched video may be further video data generated by stitching the target material and the associated material in a picture dimension. For example, as shown in FIG. 6C, the video frame from the target material and the video frame from the associated material is stitched one by one, to generate the stitched video. A video frame 616 of the stitched video includes a video frame 617 from the target material and a video frame 618 from the associated material.

In the target material and the associated material, when one is a photo and the other is a video, the stitched data may also be a stitched video. For example, the target material is a video and the associated material is a photo. The video frame of the stitched video is an image obtained by stitching a video frame of the target material and the photo corresponding to the associated material.

In some embodiments, after the mobile phone obtains the stitched data, the displayed interaction window 307 further includes a preview box 605, and the preview box 605 displays the stitched data 606.

As shown in FIG. 6A(1) to FIG. 6A(4), after collecting three target materials, for example, collecting the photo 321, the photo 503, and the photo 602, the mobile phone generates three pieces of corresponding stitched data 606, for example, a stitched photo 606-1 including the photo 321, a stitched photo 606-2 (referred to as first stitched data) including the photo 503, and a stitched photo 606-3 (referred to as second stitched data) including the photo 602. The mobile phone may display the stitched data 606 in response to that the user taps any stitched data 606. If the stitched data 606 is a stitched video, a play window is displayed in response to that the user taps the stitched video, to play the stitched video. If the stitched data 606 is a stitched image, a mask is newly displayed in response to that the user taps the stitched image, and an enlarged stitched image is displayed on the layer.

In some embodiments, the preview box 605 further includes a Generate video control 607. In addition, the interaction window 307 further displays prompt information 608, to guide the user to tap the Generate video control 607, to trigger the mobile phone to generate the media data based on the stitched data. In another embodiment, the interaction window 307 further includes a control 614 that indicates saving, and the stitched data 606 in the preview box 605 may be stored in Gallery in response to that the user taps the control 614.

For example, the mobile phone may process the stitched data based on a video generation template corresponding to the old place revisiting theme, to generate the media data that conforms to the old place revisiting theme. The video generation template includes template data used to create a video, for example, includes music that needs to be configured and a special effect that needs to be added.

As shown in FIG. 6A(1) to FIG. 6A(4), the mobile phone generates media data 609 based on the stitched photo 606-1, the stitched photo 606-2, and the stitched photo 606-3 in response to that the user taps the Generate video control 607. The media data 609 may be video data including the stitched photo 606-1, the stitched photo 606-2, and the stitched photo 606-3. In addition, the media data 609 may be further configured with music, a special effect, and/or a transition. An operation of tapping the Generate video control 607 may be referred to as a fourth operation. The media data 609 may be referred to as first media data.

After the media data 609 is generated, the media data 609 may be newly displayed in the interaction window 307. The mobile phone may store, share, delete, play, or comment the media data 609 in response to an operation performed by the user on the media data 609.

In some embodiments, a "Smart caption" control 610, a "Change template" control 611, a "Change music" control 612, and a "Change duration" control 613 are displayed below the media data 609.

For example, the mobile phone may add a text special effect to a video frame of the media data 609 in response to an operation performed by the user on the "Smart caption" control 610. The mobile phone may further regenerate new media data based on the reference material and a changed video generation template in response to an operation performed by the user on the "Change template" control 611. The mobile phone may further change music in the media data 609 in response to an operation performed by the user on the "Change music" control 612. The mobile phone may further change playback duration of the media data 609 in response to an operation performed by the user on the "Change music" control 613.

The foregoing embodiments describe a process of guiding, based on the reference material recommended by the mobile phone, the user to operate the mobile phone to photograph the target material, and then generating the media data based on the target material.

In some embodiments, the mobile phone may further manage the reference materials in response to an indication of the user.

For example, the user manages the reference material by using a voice instruction (or a text instruction). In another example, the user may alternatively manage the reference material by using a manual operation. This is not limited in this application.

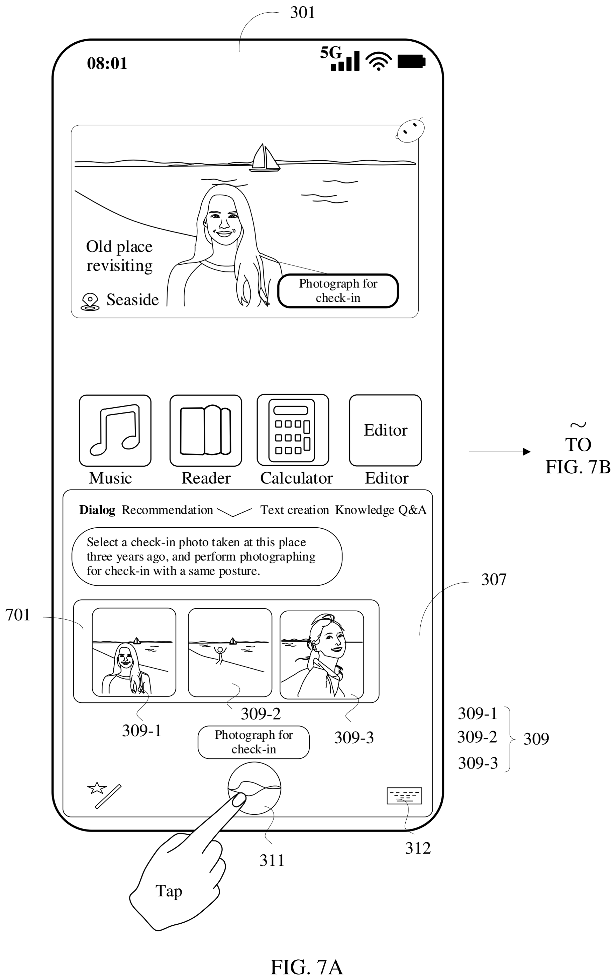

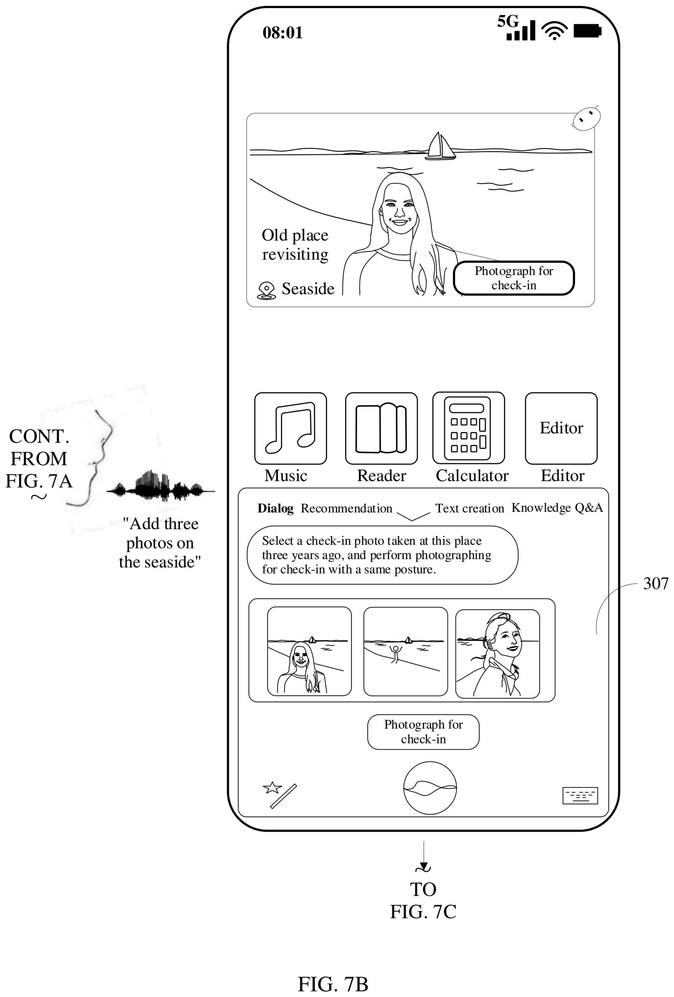

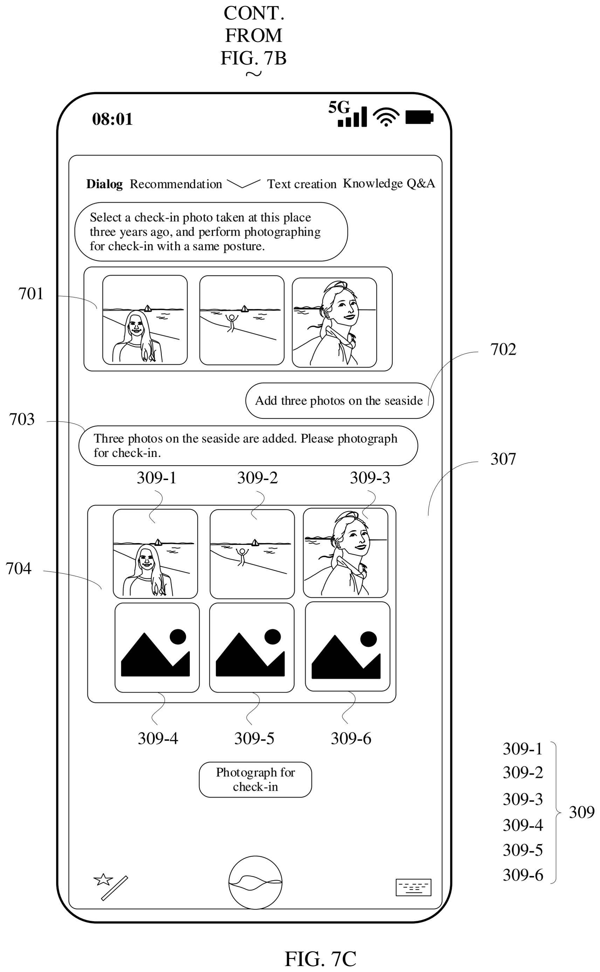

In a scenario in which a reference material is added by using a voice instruction, as shown in FIG. 7A to FIG. 7C, the mobile phone displays the interaction window 307, the interaction window 307 includes a dialog box 701, and the dialog box 701 displays the reference material 309 (for example, the photo 309-1, the photo 309-2, and the photo 309-3). The mobile phone may wake up the voice assistant function in response to that the user touches and holds the voice input control 311, or in response to detecting that the user says the preconfigured keyword After waking up the voice assistant function, the mobile phone may detect whether the audio signal transmitted in the environment includes the voice instruction said by the user.

For example, the user may say, to the mobile phone, a voice instruction "Add three photos on the seaside", which is referred to as, for example, a first voice instruction. Correspondingly, the mobile phone may detect an audio signal including the voice instruction "Add three photos on the seaside". In response to detecting the voice instruction, the mobile phone recognizes and parses the voice instruction, to obtain a recognition result and a parsing result of the voice instruction.

As shown in FIG. 7A to FIG. 7C, the recognition result obtained by the mobile phone is a text "Add three photos on the seaside". Correspondingly, the mobile phone may display a recognition result 702 of the voice instruction in the interaction window 307.

As shown in FIG. 7A to FIG. 7C, the parsing result obtained by the mobile phone is that the voice instruction indicates a material editing function. After the material editing function is started, the mobile phone selects, as newly added reference materials based on key semantic words such as "three", "seaside", and "photo" that are parsed out from the voice instruction, three photos with a seaside background from a historical material that meets the condition 1 and that is not selected as a reference material.

In response to selecting the three newly added reference materials, the mobile phone may display prompt information 703 in the interaction window 307, to prompt that the three reference materials are newly added. In addition, the mobile phone may further display a dialog box 704 in the interaction window 307. A reference material 309 is also displayed in the dialog box 704. The reference material 309 includes the photo 309-1, the photo 309-2, the photo 309-3, the photo 309-4, the photo 309-5, and the photo 309-6.

It may be understood that, in the interaction window 307, various types of information (for example, prompt information and a dialog box) are arranged from top to bottom based on an appearing sequence. Both the dialog box 701 and the dialog box 704 are used to display the reference material 309. The dialog box 704 is arranged below the dialog box 701, which indicates that the dialog box 704 appears later. Compared with the dialog box 701, in the dialog box 704, the photo 309-4, the photo 309-5, and the photo 309-6 are newly added, which indicates that the mobile phone determines three newly added reference materials 309. The newly added material may be referred to as a sixth material.

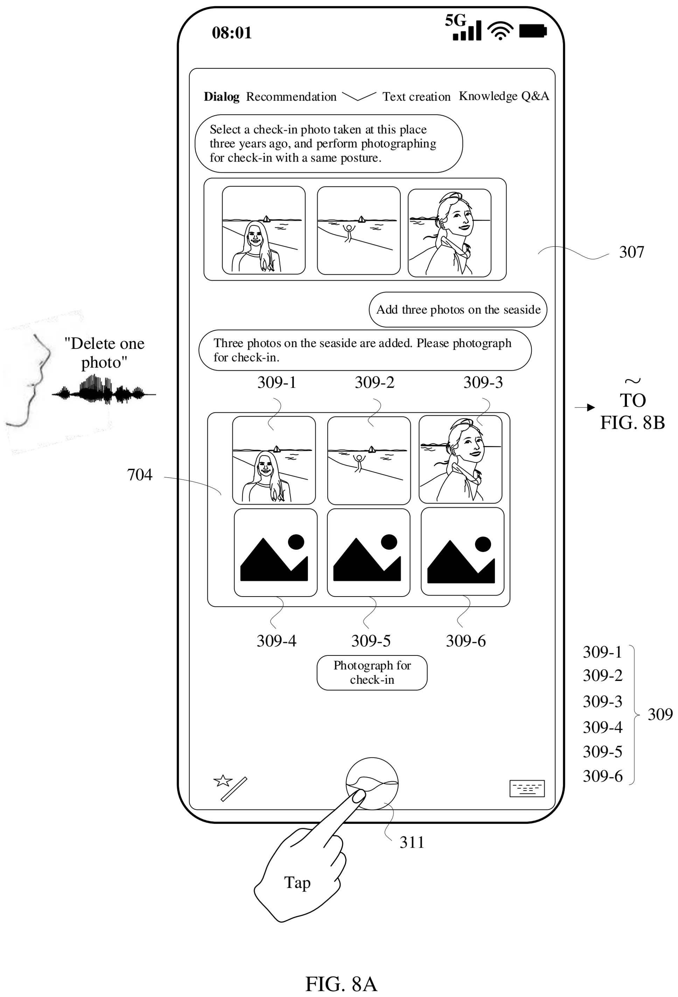

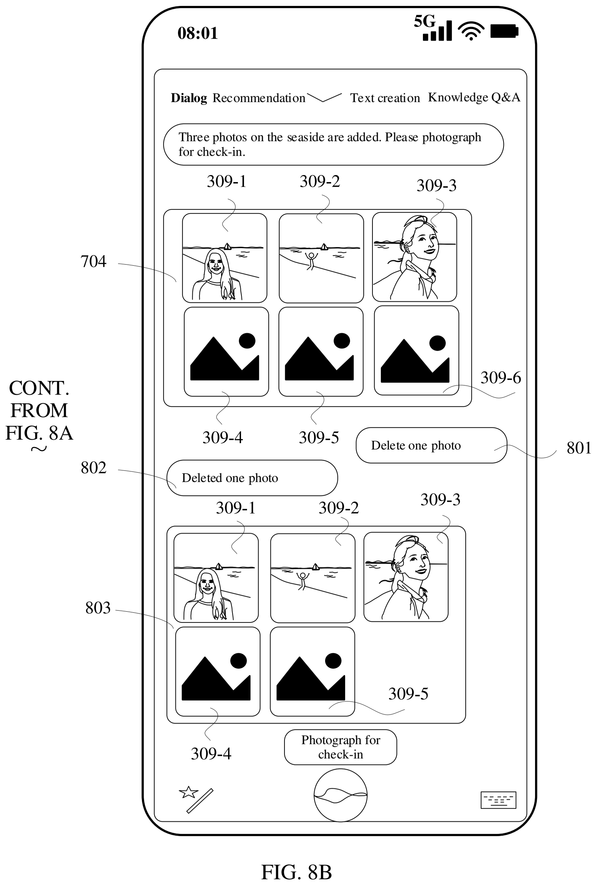

In a scenario in which a reference material is deleted by using a voice instruction, as shown in FIG. 8A and FIG. 8B, the mobile phone displays the interaction window 307, and the interaction window 307 includes the dialog box 704. The mobile phone may wake up the voice assistant function again in response to that the user touches and holds the voice input control 311, or in response to detecting a keyword used to wake up the voice assistant function. Then, if the user may say, to the mobile phone, a voice instruction "Delete one photo", which is referred to as, for example, a second voice instruction, correspondingly, the mobile phone may detect an audio signal including the voice instruction "Delete one photo". In response to detecting the voice instruction, the mobile phone recognizes and parses the voice instruction, to obtain a recognition result and a parsing result of the voice instruction.

As shown in FIG. 8A and FIG. 8B, the recognition result obtained by the mobile phone is a text "Delete one photo". Correspondingly, the mobile phone may display a recognition result 801 of the voice instruction in the interaction window 307.

As shown in FIG. 8A and FIG. 8B, the parsing result obtained by the mobile phone is that the voice instruction indicates the material editing function. After the material editing function is started, the mobile phone chooses to delete one reference material from the current reference material 309 based on key semantic words such as "delete", "one", and "photo" that are parsed out from the voice instruction. A type of the selected reference material is a photo.

For example, the mobile phone may select, based on an aesthetic score from the reference material (for example, the photo 309-1, the photo 309-2, the photo 309-3, the photo 309-4, the photo 309-5, and the photo 309-6) in the dialog box 704, a reference material that needs to be deleted. The reference material that needs to be deleted is a photo, and the aesthetic score is less than a preset value, or is less than that of another reference material (a photo-type material).

As shown in FIG. 8A and FIG. 8B, after the reference material is deleted, the mobile phone may display prompt information 802 in the interaction window 307, to remind the user that one reference material is deleted. In addition, the mobile phone may further display a dialog box 803 in the interaction window 307. A reference material is also displayed in the dialog box 803. The reference material in the dialog box 803 includes the photo 309-1, the photo 309-2, the photo 309-3, the photo 309-4, and the photo 309-5, and does not include the deleted photo 309-6. The dialog box 803 is arranged below the dialog box 704, which indicates that a latest reference material does not include the photo 309-6.

The user may further directly indicate a ranking of a photo to be deleted, and the mobile phone may delete, based on a sequence number of the ranking, the photo with the corresponding sequence number.

In addition, the user may further indicate, by using a voice instruction, the mobile phone to change the reference material to another historical material that meets the condition 1. For example, R materials are selected from the another historical material that meets the condition 1. R is a quantity of current reference materials. For example, in FIG. 8A and FIG. 8B, a quantity of R is 5 when the dialog box 803 is displayed. Then, the current reference material is deleted, and the R selected reference materials are used as new reference materials. In some other embodiments, the user may further update some reference materials by using a third voice instruction. This is not specifically limited in this embodiment of this application.

In another embodiment, the user may further manage the reference material by using a text instruction. For example, a text instruction entered by the user is received in response to that the user taps the keyboard input control 312. In response to the text instruction "Add three photos on the seaside", the mobile phone selects, as newly added reference materials from the historical material that meets the condition 1, three photos whose backgrounds include the seaside. For implementation details, refer to FIG. 7A to FIG. 7C. Details are not described herein again.

In some other embodiments, for example, the user may alternatively manually manage the reference material.

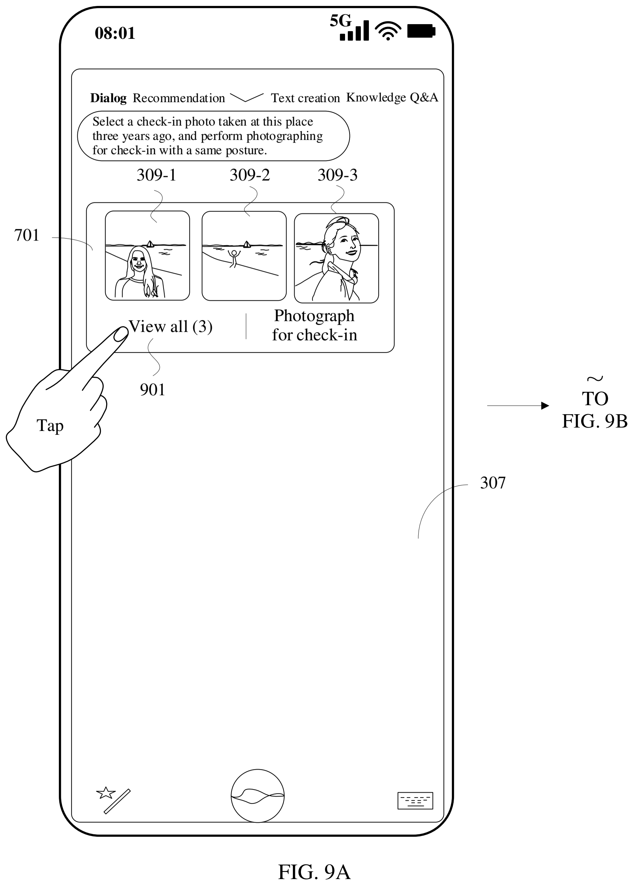

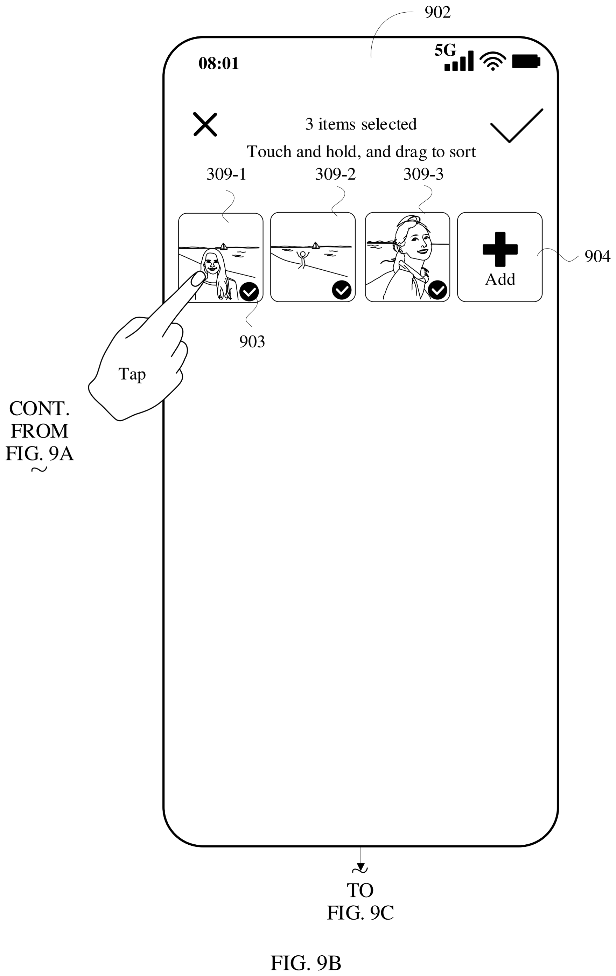

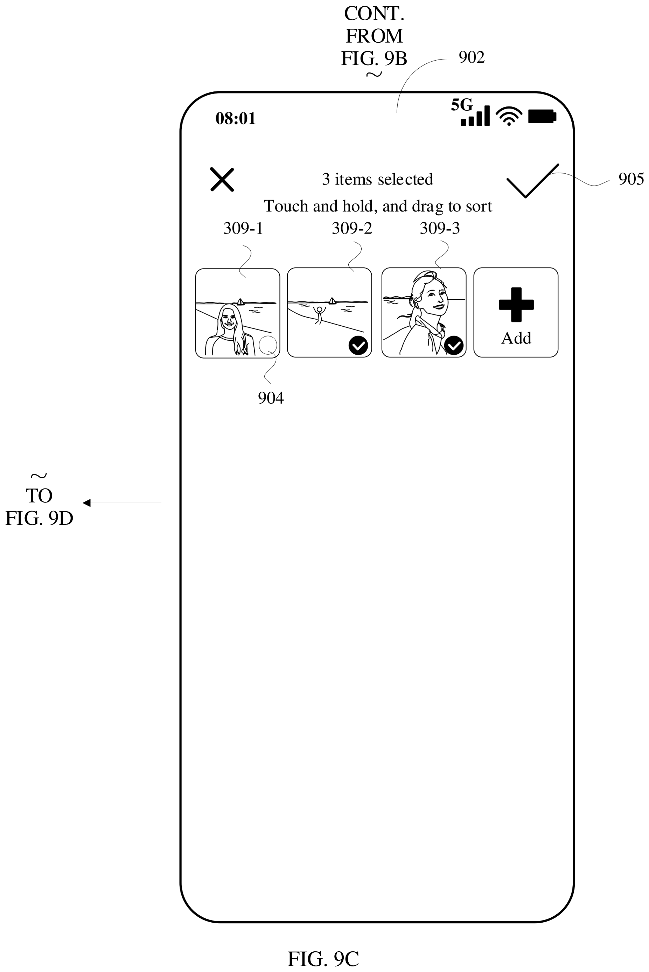

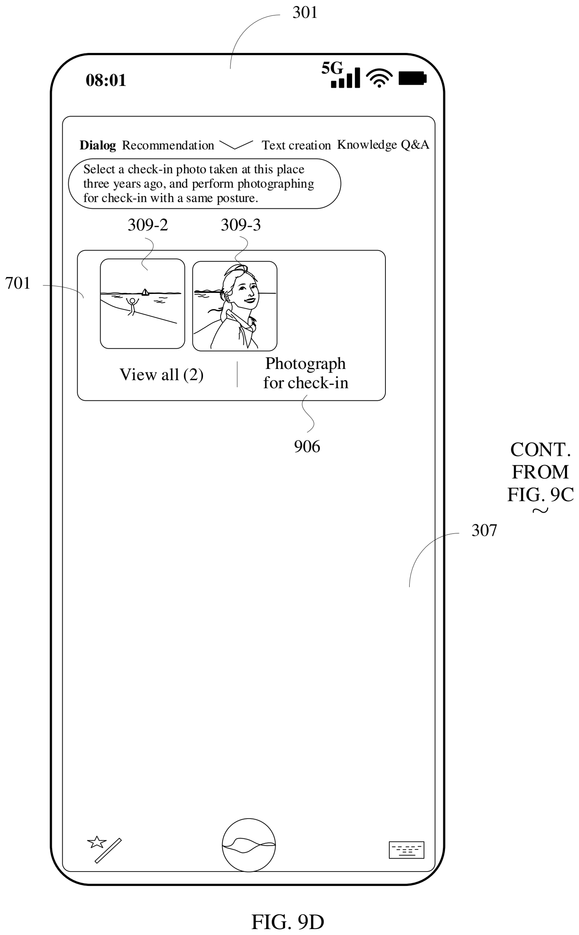

As shown in FIG. 9A to FIG. 9D, the mobile phone displays the interaction window 307. The interaction window 307 includes the dialog box 701, and a control 901 is displayed for the dialog box 701. The mobile phone may display an interface 902 in response to that the user taps the control 901. The interface 902 includes the reference material displayed in the dialog box 701, for example, the photo 309-1, the photo 309-2, and the photo 309-3.

When N reference materials cannot be displayed in the dialog box 701, the interface 902 further includes a reference material that is not displayed in the dialog box 701. In addition, when all reference materials cannot be displayed in the dialog box 701, in the dialog box 701, a reference material with a person-centered image is preferentially displayed, and a reference material with a high aesthetic score is preferentially displayed.

In another embodiment, the control 901 may not be displayed in the interaction window 307. In this scenario, the mobile phone may further display the interface 902 in response to that the user taps a blank area in the dialog box 701.

In addition, in the interface 902, the photo 309-1, the photo 309-2, and the photo 309-3 are in a selected state, and an identifier that indicates "selected" is displayed for all of the photo 309-1, the photo 309-2, and the photo 309-3. For example, an identifier 903 displayed for the photo 309-1 indicates that the photo 309-1 is in a selected state.

In some embodiments, in response to an operation performed by the user in the interface 902, the mobile phone may start a procedure of deleting a reference material specified by the user.

In a manner of deleting a reference material, the mobile phone may set the reference material (for example, the photo 309-1) to an unselected state in response to tapping any reference material in the interface 902, for example, tapping the photo 309-1.

For example, as shown in FIG. 9A to FIG. 9D, in response to that the user taps the photo 309-1, the mobile phone may cancel the identifier 903, and display an "unselected" identifier 904 for the photo 309-1.

Then, in response to that the user taps a confirmation control 905, the mobile phone re-displays the home screen 301 including the interaction window 307. In the re-displayed interaction window 307, the dialog box 701 includes the photo 309-2 and the photo 309-3. The reference material is deleted.

In this scenario, in response to an operation that the user taps the control 906, the user may be guided, based on the 309-2 and the photo 309-3, to operate the mobile phone to photograph the target material, and then the media data is generated based on the target material. For a specific implementation process, refer to the foregoing embodiments. Details are not described herein again.

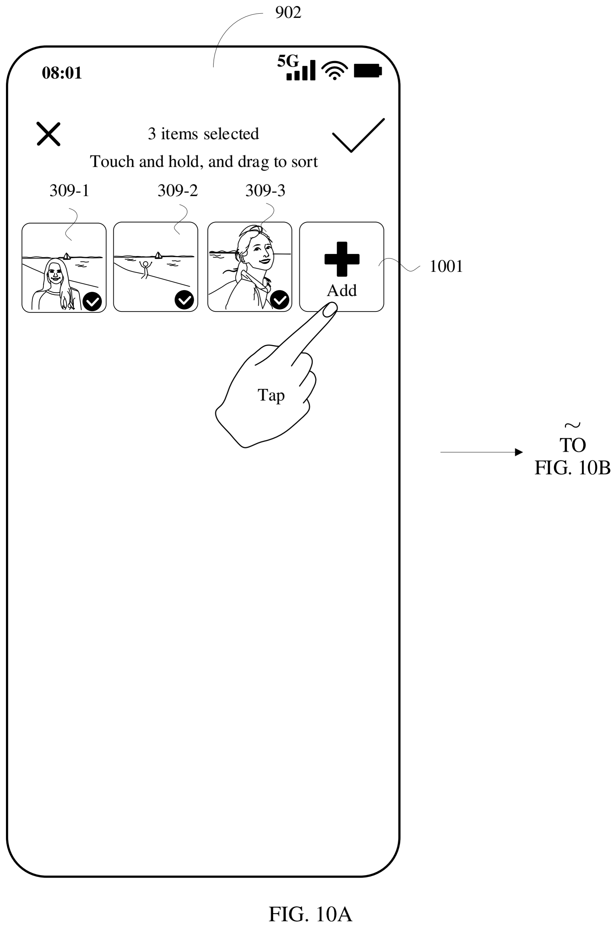

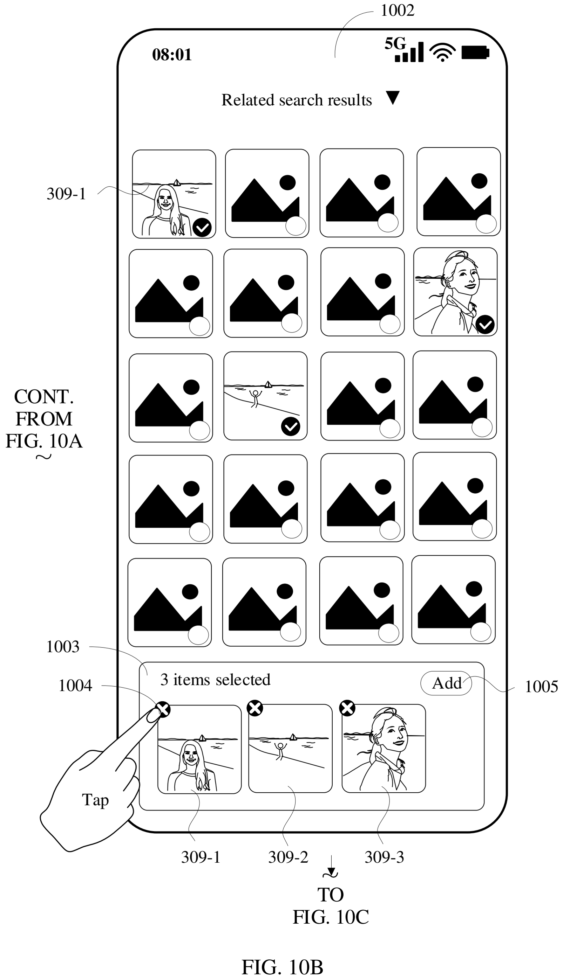

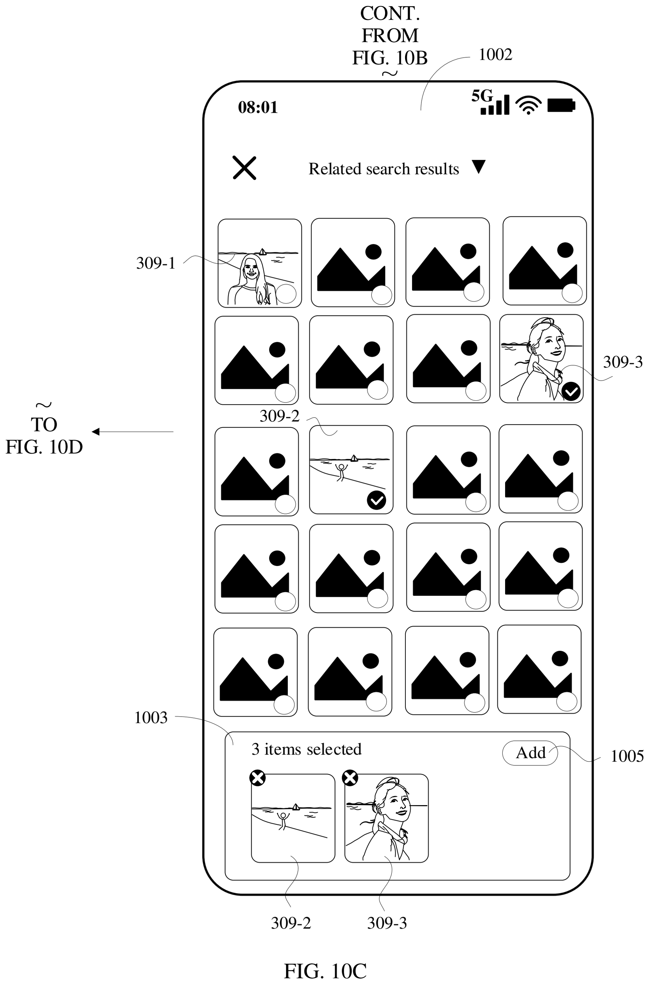

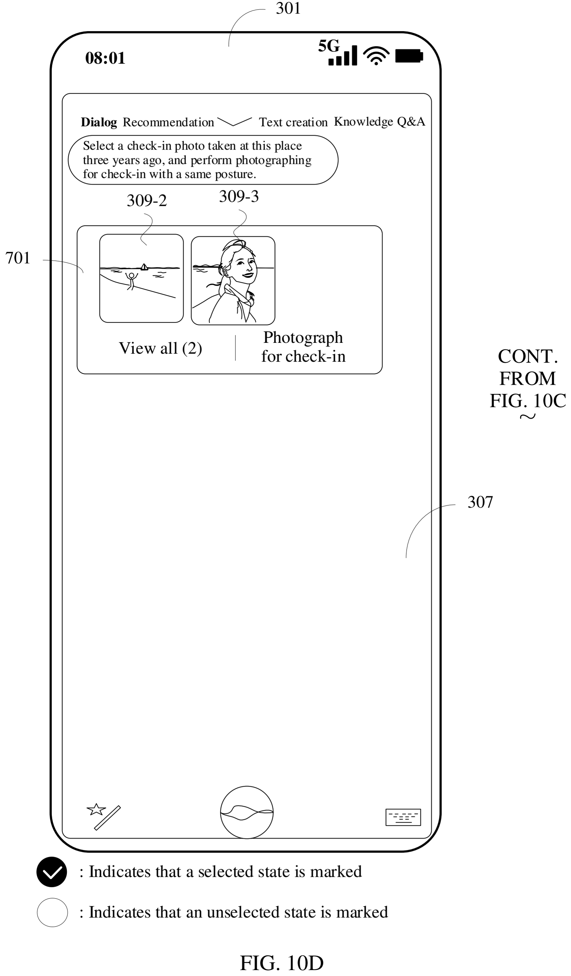

In another manner of deleting a reference material, as shown in FIG. 10A to FIG. 10D, when the interface 902 is displayed, in response to that the user taps an Add control 1001, the mobile phone may display an interface 1002, which is referred to as, for example, a fifth interface. The interface 1002 is a grid browsing page, and is used to display all historical materials (for example, the first material, the second material, the fourth material, and the sixth material) that meet the condition 1, to be selected by the user. It may be understood that the historical material that meets the condition 1 also includes the photo 309-1, the photo 309-2, and the photo 309-3.

It may be understood that the photo 309-1, the photo 309-2, and the photo 309-3 are current reference materials. In the interface 1002, the photo 309-1, the photo 309-2, and the photo 309-3 are marked as a selected state. In the interface 1002, another material (for example, the sixth material) is marked as an unselected state.

In addition, the mobile phone displays a window 1003, for example, a selection preview box, in the interface 1002. The current reference material is displayed in the window 1003. For example, the current reference material includes the photo 309-1, the photo 309-2, and the photo 309-3, and the window 1003 displays a thumbnail that indicates the photo 309-1, a thumbnail that indicates the photo 309-2, and a thumbnail that indicates the photo 309-3. In the window 1003, a control that indicates deletion is displayed for each reference material. For example, a control 1004 is displayed for the photo 309-1 in the window 1003.

In some embodiments, the mobile phone may delete the photo 309-1 from the reference material in response to that the user taps the control 1004. Correspondingly, the mobile phone may set the photo 309-1 in the interface 1002 to an unselected state, and delete the photo 309-1 in the window 1003.

In response to that the user taps the control 1005 in the window 1003, the mobile phone re-displays the home screen 301 including the interaction window 307. In the re-displayed interaction window 307, the dialog box 701 includes the photo 309-2 and the photo 309-3. The reference material is deleted.

In some other embodiments, after the mobile phone displays the interface 1002, in response to an operation performed by the user in the interface 1002, the mobile phone may start a procedure of adding a reference material.

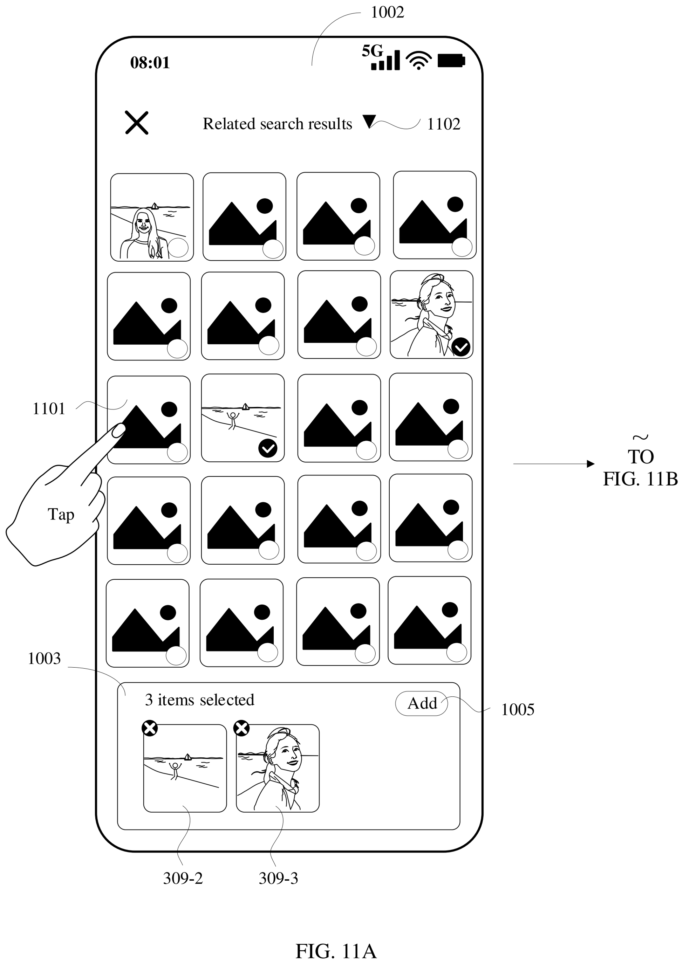

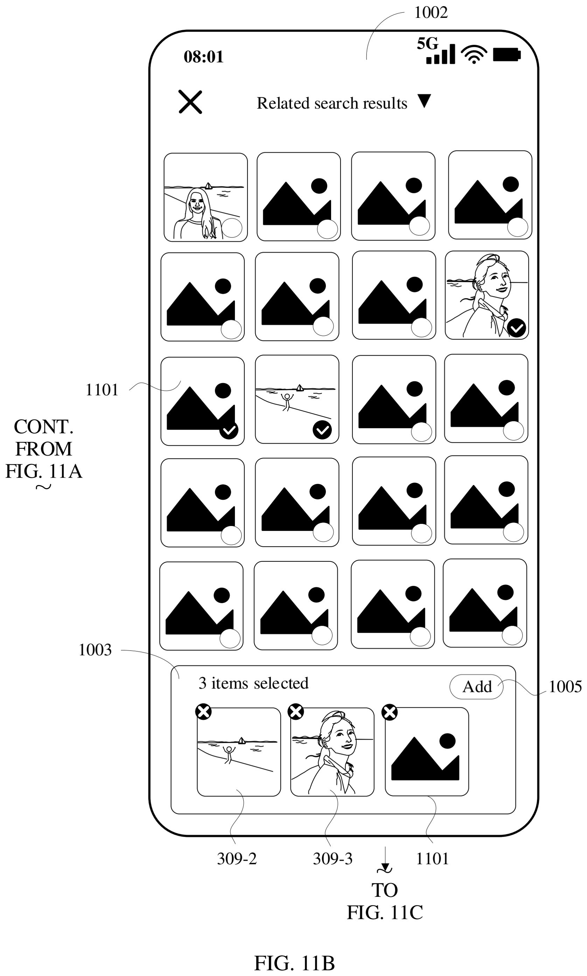

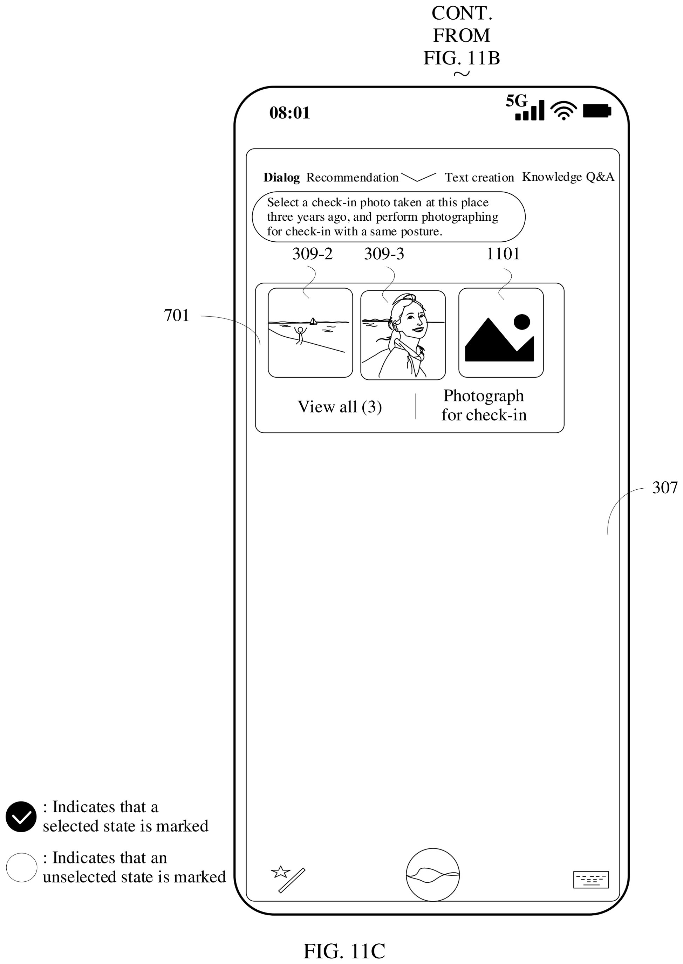

As shown in FIG. 11A to FIG. 11C, the mobile phone displays an interface 1002. The interface 1002 includes a material 1101 that is marked as an unselected state. A window 1003 is displayed in the interface 1002. The material 1101 in the interface 1002 is set to a selected state in response to that the user taps the material 1101. In addition, the mobile phone may further newly display the material 1101 in the window 1003, which indicates that the material 1101 is selected as a reference material.

Then, in response to that the user taps a control 1005 in the window 1003, the mobile phone re-displays the home screen 301 including the interaction window 307. In the re-displayed interaction window 307, the dialog box 701 includes the photo 309-2, the photo 309-3, and the material 1101. The reference material is newly added.

In the example shown in FIG. 11A to FIG. 11C, the mobile phone may select, in response to a user operation, a reference material from the historical material that meets the condition 1. In another embodiment, the mobile phone may further select, in response to a user operation, a newly added reference material from all materials (photos or videos) stored in the mobile phone.

For example, as shown in FIG. 11A to FIG. 11C, the interface 1002 includes a control 1102. In response to that the user taps the control 1102, the mobile phone may display all stored materials, to be selected by the user. In this way, the mobile phone can select a newly added reference material from all the stored materials in response to a user operation.

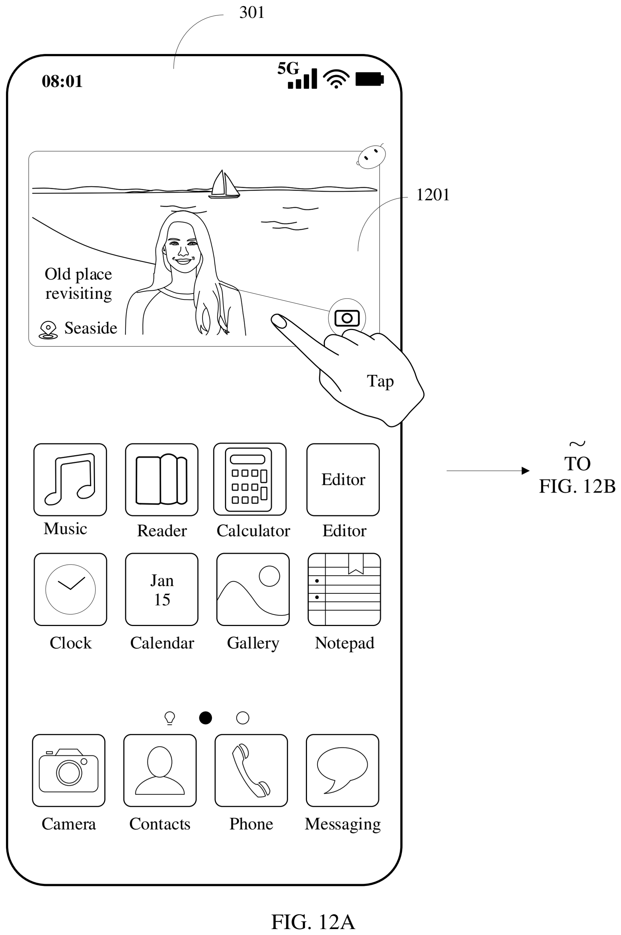

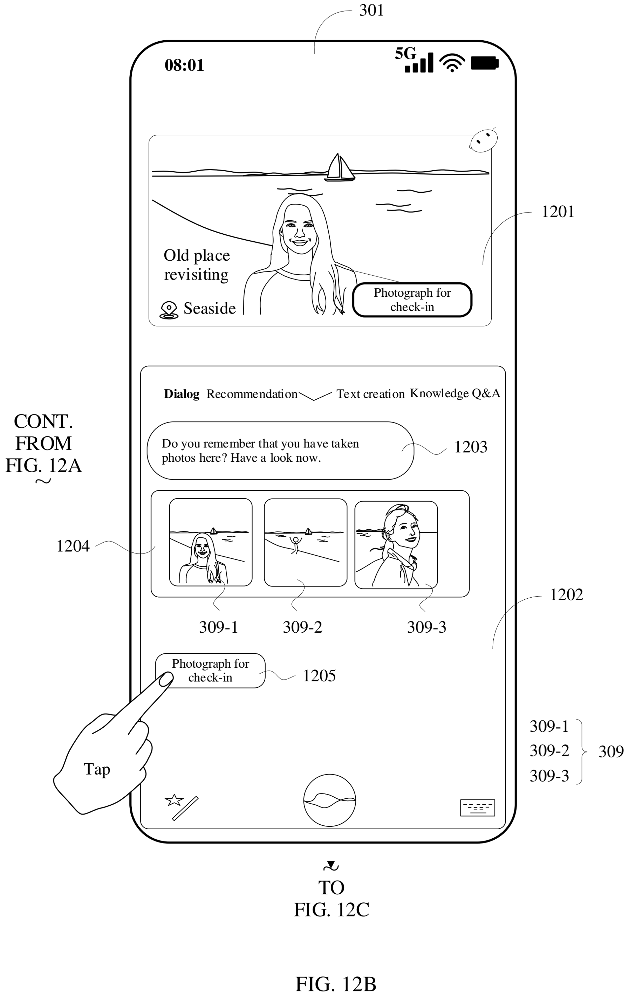

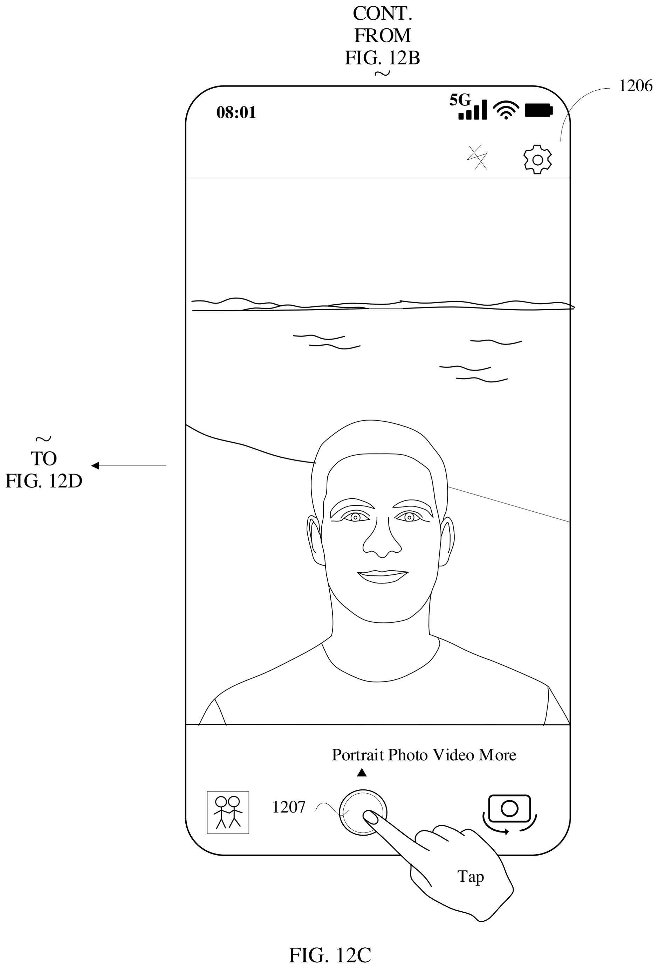

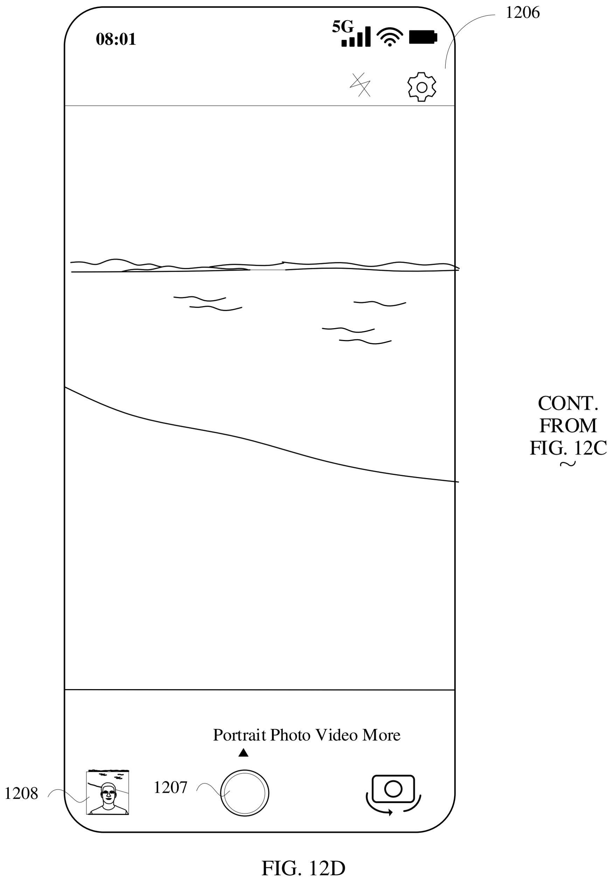

In another embodiment, as shown in FIG. 12A to FIG. 12D, when the mobile phone displays the home screen 301, a function card 1201 is displayed on the home screen 301 in response to that the current scene conforms to the old place revisiting theme. The function card 1201 is similar to the function card 302. Details are not described herein again.

The interaction window 1202 is displayed in response to that the user taps the function card 1201.

For example, the interaction window 1202 includes prompt information 1203, and the prompt information 1203 is used to remind the user to view a photo and/or video photographed at a current place.

For example, the interaction window 1202 further includes a dialog box 1204, and the dialog box 1204 is used to display the reference material 309, for example, the photo 309-1, the photo 309-2, and the photo 309-3. The reference material 309 may be a material selected from the historical material that meets the condition 1. For specific details, refer to the foregoing embodiments. Details are not described herein.

In addition, the reference material 309 displayed in the dialog box 1204 may meet one or more of the following conditions:
(1) An aesthetic score is higher than that of another material. The another material is a material that is in the historical material that meets the condition 1 and that is not selected as a reference material.
(2) A similarity between any two reference materials is lower than a preset similarity threshold. It may be understood that deduplication may be performed based on the aesthetic score if the similarity between the two reference materials is greater than or equal to the preset similarity threshold. For example, a similarity between a reference material d and a reference material e is higher than or equal to the preset similarity threshold, and an aesthetic score of the reference material d is higher than an aesthetic score of the reference material e. After deduplication is performed based on the aesthetic score, the reference material d is displayed in the dialog box 1204, and the reference material e is not displayed.

In addition, some reference materials may be hidden when all reference materials cannot be displayed in the dialog box 1204. A reference material with a person-centered image is preferentially displayed in the dialog box 1204.

When the dialog box 1204 is displayed, the user may view the reference material 309 by tapping the reference material 309 in the dialog box 1204. For example, the mobile phone may display a large form of the photo 309-1 in response to that the user taps the photo 309-1.

For example, the interaction window 1202 further includes a control 1205. In response to that the user taps the control 1205, the mobile phone displays a photographing interface 1206, which is referred to as, for example, a seventh interface. The photographing interface 1206 may display a preview stream collected in real time. In addition, the photographing interface 1206 may further include a control 1207 that indicates photographing. For example, the mobile phone uses the portrait mode. The mobile phone collects one frame of image in response to that the user taps the control 1207, and uses the frame of image as a target material (a seventh material). In addition, the collected target material may be stored in Gallery. After the target material is stored in Gallery, a thumbnail 1208 of the target material may be displayed in the photographing interface 1206. In response to an operation that the user taps the thumbnail 1208, the mobile phone may display an image preview interface including the target material.

It may be understood that, when the photographing interface 1206 is displayed, the mobile phone may photograph the one or more target materials in any photographing mode in response to a user operation, and store the one or more target materials in Gallery.

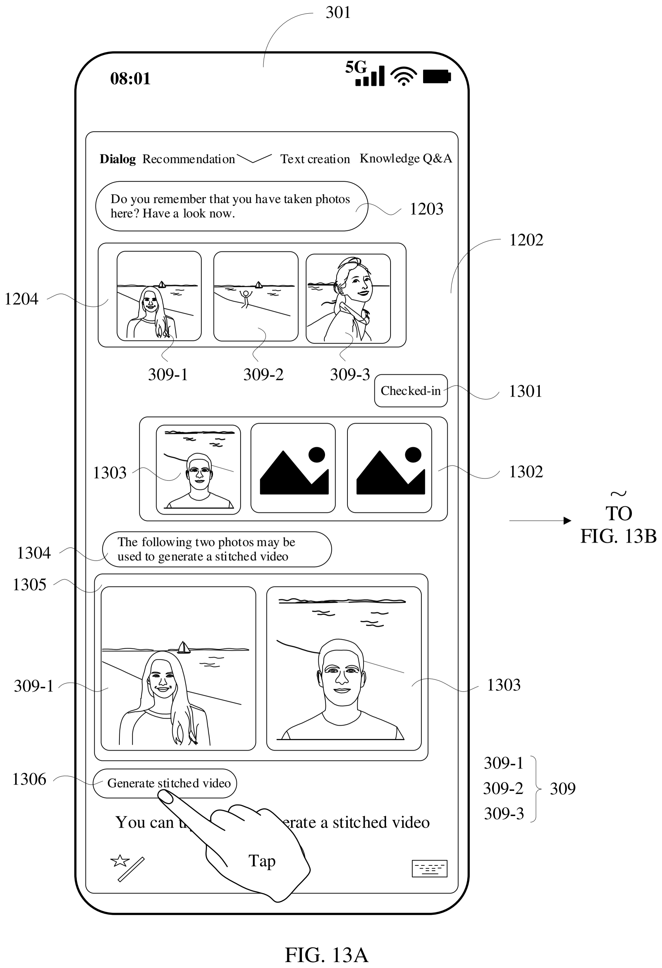

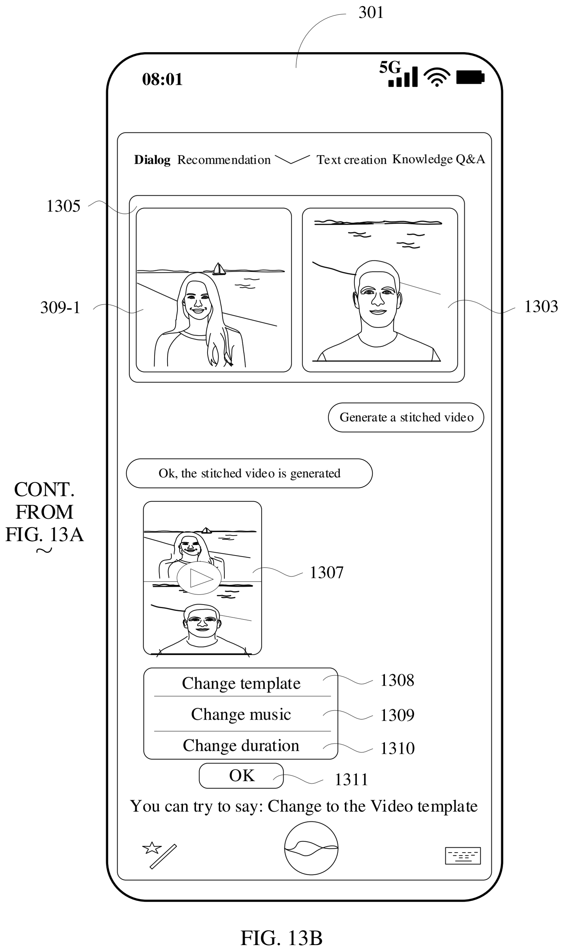

Then, as shown in FIG. 13A and FIG. 13B, in response to an operation (referred to as, for example, a second operation) performed by the user to indicate to return to the home screen 301, the mobile phone may re-display the home screen 301. The home screen 301 includes the interaction window 1202. Compared with the interaction window 1202 in FIG. 12A to FIG. 12D, in the interaction window 1202 in FIG. 13A and FIG. 13B, prompt information 1301 and a dialog box 1302 (a second display column) are added. The prompt information 1301 is used to prompt the user that photographing is completed at a current location. The dialog box 1302 may display a target material collected at the current location, for example, the photo 1303 (for example, the seventh material).

In some embodiments, before displaying the dialog box 1302, the mobile phone may further perform de-duplication on the target material. For example, the target material collected at the current location includes the material a, the material b, a material c, and a material d. If a similarity between the material b and the material c exceeds the preset similarity threshold, and the aesthetic score of the material b is higher than an aesthetic score of the material c, after de-duplication, the material b is retained, and the material c is removed. The mobile phone displays the material a, the material b, and the material d in the dialog box 1302.

In addition, some target materials may be hidden when all target materials cannot be displayed in the dialog box 1302. A target material with a person-centered image is preferentially displayed in the dialog box 1302.

In another embodiment, after the mobile phone photographs the target material in response to a user operation, one or more materials may be selected from each of the target material and the reference material.

For example, the mobile phone may use a material with a highest aesthetic score in the reference material as one of selected materials, for example, select the photo 309-1 from the reference material. The mobile phone may use a material with a highest aesthetic score in the target material as one of selected materials, for example, select the photo 1303 from the target material.

Correspondingly, the interaction window 1202 further includes prompt information 1304, and the prompt information 1304 is used to prompt the user that a target material and a reference material that are suitable for stitching are selected. In addition, the interaction window 1202 further includes a dialog box 1305, and the dialog box 1305 is used to display a selected reference material and a selected target material. For example, the dialog box 1305 displays the photo 309-1 and the photo 1303. A control 1306 is displayed below the dialog box 1305. In response to that the user taps the control 1306 (referred to as, for example, a fifth operation), the mobile phone generates, based on the photo 1303 and the photo 309-1, a stitched video based on the video generation template corresponding to the old place revisiting theme. If a similarity evaluation value between the photo 1303 and the photo 309-2 is higher than a similarity evaluation value between the photo 1303 and the photo 309-1, third stitched data including the photo 1303 and the photo 309-2 may be generated.

After generating the stitched video, the mobile phone may newly add the stitched video in the interaction window 1202, for example, the video 1307 in FIG. 13A and FIG. 13B. In addition, the mobile phone may further display, in the interaction window 1202, the foregoing function control used to edit the stitched data, for example, a "Change template" control 1308, a "Change music" control 1309, and a duration change control 1310.

For example, the mobile phone may re-select a video generation template in response to an operation performed by the user on the "Change template" control 1308 or in response to detecting a voice instruction indicating to change a video template, and then re-generate, based on the photo 1303 and the photo 309-1, a stitched video based on the newly selected video generation template.

For example, when the generated stitched video is a video 1307, the mobile phone may change video music configured in the video 1307 in response to an operation performed by the user on the "Change music" control 1309 or in response to detecting a voice instruction indicating to change music.

For example, when the generated stitched video is a video 1307, the mobile phone may lengthen or shorten duration of the video 1307 in response to an operation performed by the user on the duration change control 1310 or in response to detecting a voice instruction indicating to change duration.

In addition, the interaction window 1202 further includes a confirmation control 1311. In response to that the user taps the confirmation control 1311, a generated stitched video or an edited stitched video may be saved.

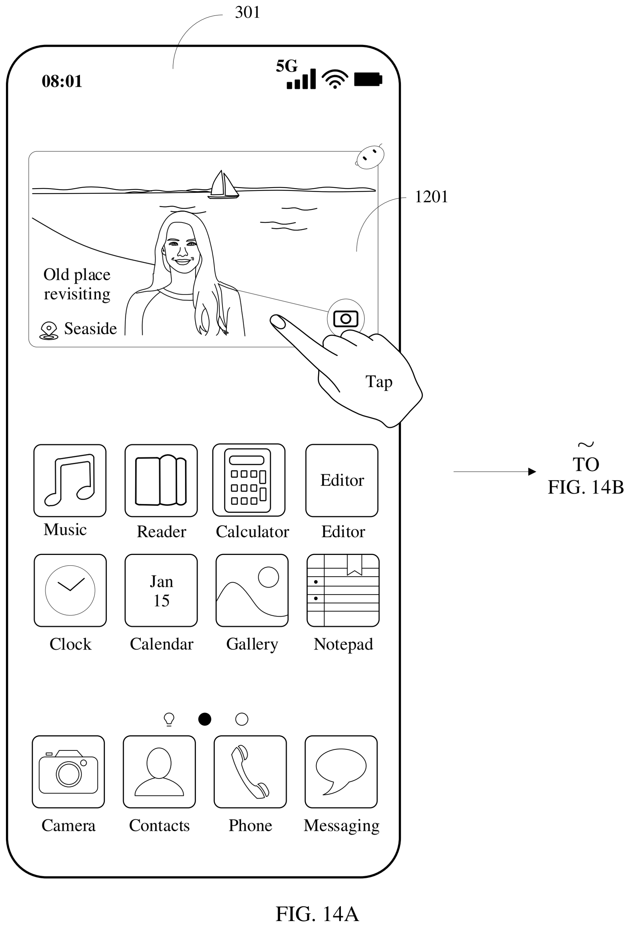

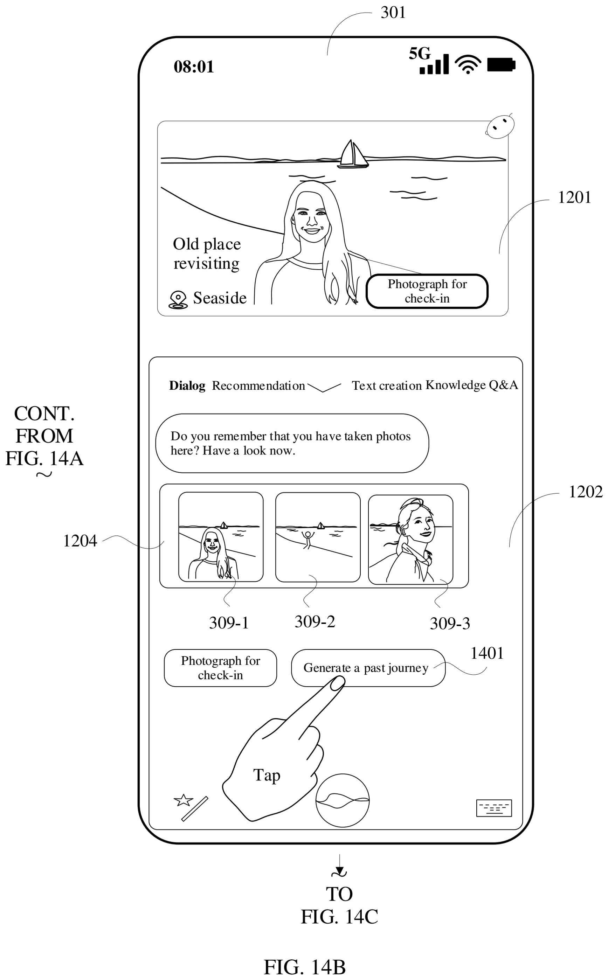

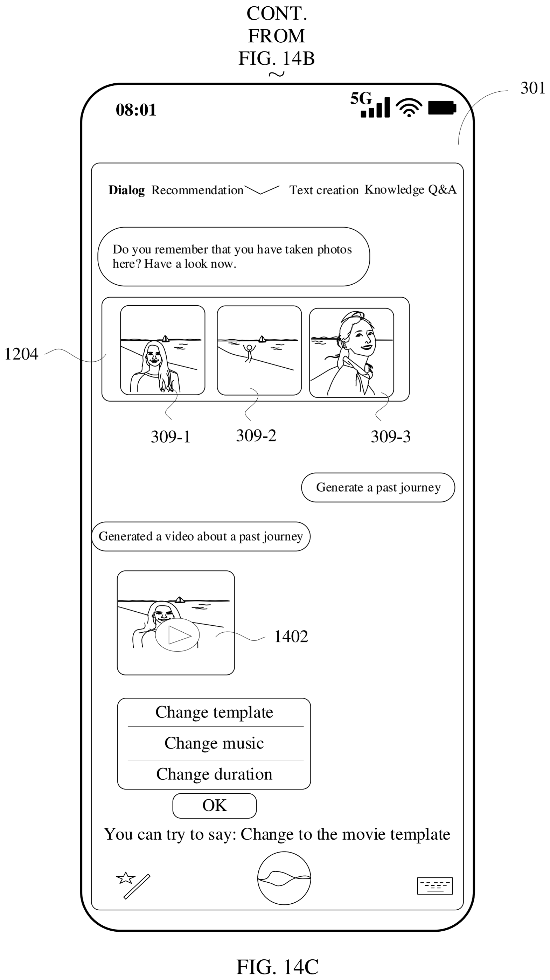

In another embodiment, as shown in FIG. 14A to FIG. 14C, when the mobile phone displays the home screen 301, the function card 1201 is displayed on the home screen 301 in response to that the current scene conforms to the old place revisiting theme. The interaction window 1202 is displayed in response to that the user taps the function card 1201.

As shown in FIG. 14A to FIG. 14C, the interaction window 1202 further includes a control 1401 (a fourth control). In response to that the user taps the control 1401, the mobile phone may generate a video related to a past journey theme. It may be understood that the video related to a past journey may be a video (second media data) generated based on a historical material.

For example, a video 1402 may be generated based on reference materials such as the photo 309-1, the photo 309-2, and the photo 309-3 and based on a video generation template related to the past journey theme. Alternatively, the mobile phone may generate the video 1402 based on the historical material that meets the condition 1 and the video generation template related to the past journey theme. After generating the video 1402, the mobile phone may newly display the video 1402 in the interaction window 1202.

In another embodiment, when displaying the home screen 301, the mobile phone displays the function card 1201 on the home screen 301 in response to that the current scene conforms to the old place revisiting theme. The interaction window 1202 is displayed in response to that the user taps the function card 1201.

For example, the interaction window 1202 further includes the dialog box 1204, and the dialog box 1204 is used to display the reference material 309, for example, the photo 309-1, the photo 309-2, and the photo 309-3.

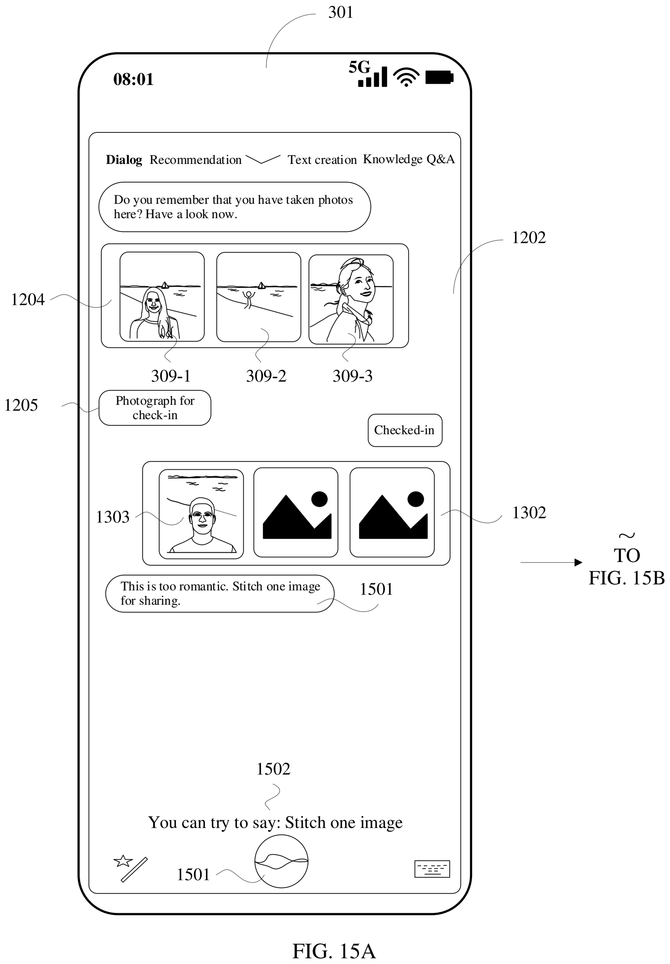

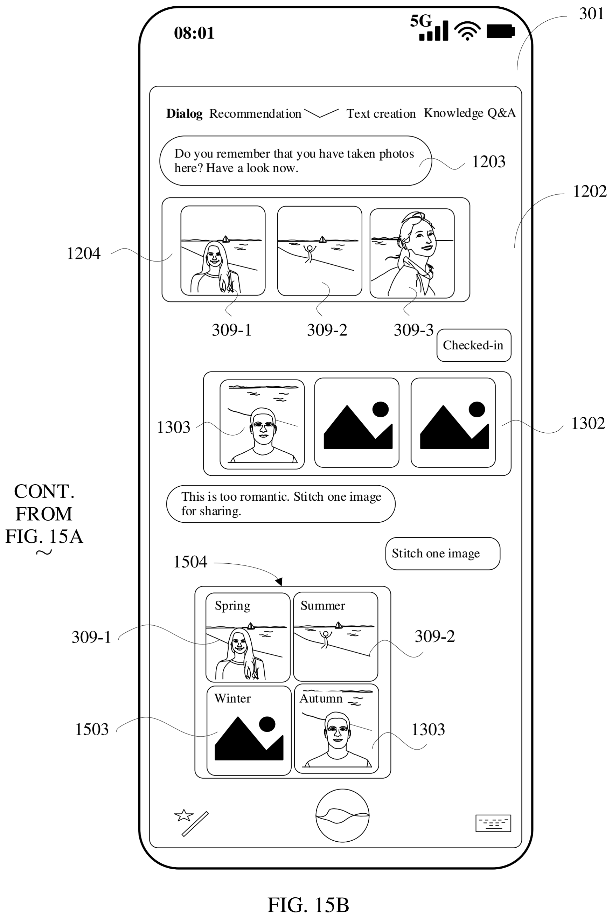

Then, the mobile phone collects one or more target materials in response to an operation performed by the user on the control 1205. For a process of collecting the target materials, refer to the foregoing embodiments. Details are not described herein again. After the target material is collected, as shown in FIG. 15A and FIG. 15B, the mobile phone re-displays the interaction window 1202. The interaction window 1202 includes a dialog box 1302. The dialog box 1302 may display the target material collected at the current location, for example, the photo 1303.

In addition, the interaction window 1202 further includes prompt information 1501, and the prompt information 1501 may recommend that the user may perform stitching based on the target material and the reference material. In addition, the interaction window 1202 further includes prompt information 1502, and the prompt information 1502 is used to prompt the user to trigger, by saying "Try to stitch an image", the mobile phone to perform stitching.

In response to detecting that the user says a voice instruction "Try to stitch an image", the mobile phone may select, for stitching, one or more materials from the reference material and the historical material that meets the condition 1. For example, all of the photo 309-1, the photo 309-2, and the photo 1503 are historical materials photographed at the current location. The photo 309-1 is photographed in spring, the photo 309-2 is photographed in summer, and the photo 1503 is photographed in winter. In addition, a current season is autumn. When the photo 1303 is photographed at the current location, the mobile phone may generate a stitched image 1504 based on the photo 309-1, the photo 309-2, the photo 1503, and the photo 1303 in response to the voice instruction "Try to stitch an image". The stitched image 1504 includes the photo 309-1, the photo 309-2, the photo 1503, and the photo 1303.

An embodiment of this application further provides an electronic device. The electronic device may perform the method mentioned in the foregoing embodiments. The electronic device may include a memory and one or more processors. The memory is coupled to the processor. The memory is configured to store computer program code, and the computer program code includes computer instructions. When the processor executes the computer instructions, the electronic device may be enabled to perform steps in the foregoing embodiments. Certainly, the electronic device includes but is not limited to the memory and the one or more processors.

For example, the electronic device displays a first interface. The first interface may be the photographing interface 314 in the foregoing embodiments. A first material displayed in the first interface may be the photo 309-1 mentioned in the foregoing embodiments.

An embodiment of this application further provides a chip system. The chip system may be applied to the electronic device in the foregoing embodiments. The chip system includes at least one processor and at least one interface circuit. The processor may be the processor in the electronic device. The processor and the interface circuit may be interconnected through a line. The processor may receive computer instructions from the memory of the electronic device through the interface circuit, and execute the computer instructions. When the computer instructions are executed by the processor, the electronic device may be enabled to perform steps in the foregoing embodiments. Certainly, the chip system may further include another discrete component. This is not specifically limited in this embodiment of this application.

In some embodiments, based on the descriptions of the foregoing implementations, a person skilled in the art may clearly understand that for the purpose of convenient and brief descriptions, division into the functional modules is merely used as an example for description. In an actual application, the functions can be allocated to different functional modules for an implementation based on a requirement. In other words, an inner structure of an apparatus is divided into different functional modules, to implement all or some of the foregoing described functions. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A media data generation method, applied to an electronic device, wherein the electronic device comprises a camera, and the method comprises:
displaying a first interface, wherein the first interface displays a preview stream collected in real time by the camera, and the first interface further displays a first material;
displaying a second interface in response to a sliding operation performed by a user on the first material, wherein the second interface displays a preview stream collected in real time by the camera, and the second interface further displays a second material;
photographing a third material in response to a first operation performed by the user to indicate photographing; and
displaying a third interface in response to a second operation, wherein the third interface displays first stitched data comprising the second material and the third material.

2. The method according to claim 1, wherein the first material and the second material are materials that meet one or more of the following first conditions:
a photographing location is the same as a current location of the electronic device, or a distance is less than a preset distance threshold; and
a time interval between a photographing time and a current time point exceeds a preset time threshold.

3. The method according to claim 2 or 3, wherein before the displaying a first interface, the method further comprises:
displaying a first card when a material that meets a first condition is stored in the electronic device, wherein the first condition comprises a combination of one or more of the following: a photographing location is the same as a current location of the electronic device, or a distance is less than a preset distance threshold; and a time interval between a photographing time and a current time point exceeds a preset time threshold; and
detecting an operation performed by the user on the first card.

4. The method according to claim 3, wherein the method further comprises:
displaying an interaction window in response to the operation performed by the user on the first card, wherein the interaction window comprises a first control and a first display column, and the first display column comprises the first material and a second material; and
the displaying a first interface comprises: displaying the first interface in response to that the user taps the first control.

5. The method according to any one of claims 1 to 4, wherein after the photographing a third material and before the displaying a third interface, the method further comprises:
displaying a fourth interface in response to a third operation, wherein the fourth interface displays a preview stream collected in real time by the camera, the fourth interface further displays a fourth material, and the fourth material is different from the second material; and
photographing a fifth material in response to the first operation performed by the user to indicate photographing, wherein
after the fifth material is photographed, the third interface further comprises second stitched data, and the second stitched data comprises the fourth material and the fifth material.

6. The method according to claim 5, wherein the method further comprises:
displaying first media data in response to a fourth operation in the third interface, wherein the first media data is a video comprising the first stitched data and the second stitched data.

7. The method according to claim 5, wherein a similarity evaluation value between the third material and the second material is higher than a similarity evaluation value between the third material and the fourth material, and a similarity evaluation value between the fifth material and the fourth material is higher than a similarity evaluation value between the fifth material and the second material; and
the similarity evaluation value is a quantized value of a similarity between image content of different materials, and a higher similarity between person postures in the different materials corresponds to a higher similarity evaluation value.

8. The method according to claim 4, wherein after the displaying an interaction window, the method further comprises:
newly displaying a sixth material in the first display column if a first voice instruction of the user is detected, wherein the sixth material is also a material that meets the first condition; or
canceling displaying of the fourth material in the first display column if a second voice instruction of the user is detected; or
changing the fourth material in the first display column to the sixth material if a third voice instruction of the user is detected.

9. The method according to claim 5, wherein after the displaying an interaction window, the method further comprises:
displaying a fifth interface after an operation performed by the user on the first display column is detected, wherein the fifth interface comprises the first material, the second material, the fourth material, and a sixth material, "selected" identifiers are displayed in the fifth interface for the first material, the second material, and the fourth material, an "unselected" identifier is displayed for the sixth material, the sixth material is also a material that meets the first condition, a selection preview box is displayed in the fifth interface, and the selection preview box comprises a thumbnail of the first material, a thumbnail of the second material, and a thumbnail of the fourth material;
changing, to the "selected" identifier in response to an operation performed by the user on the sixth material, the "unselected" identifier displayed for the sixth material;
newly displaying a thumbnail of the sixth material in the selection preview box; and
canceling displaying of the fifth interface in response to a confirmation operation performed by the user in the selection preview box, and re-displaying the interaction window, wherein the sixth material is newly displayed in the first display column in the interaction window.

10. The method according to claim 5, wherein an aesthetic score of the first material, an aesthetic score the second material, and an aesthetic score the fourth material are higher than an aesthetic score of another material that meets the first condition in the electronic device.

11. The method according to claim 5, wherein after the displaying an interaction window, the method further comprises:
displaying a fifth interface after an operation performed by the user on the first display column is detected, wherein the fifth interface comprises the first material, the second material, and the fourth material, "selected" identifiers are displayed in the fifth interface for the first material, the second material, and the fourth material, a selection preview box is displayed in the fifth interface, and the selection preview box comprises a thumbnail of the first material, a thumbnail of the second material, and a thumbnail of the fourth material;
changing, to the "unselected" identifier in response to an operation performed by the user on the thumbnail of the fourth material in the selection preview box, the "selected" identifier displayed for the fourth material;
canceling displaying of the thumbnail of the fourth material in the selection preview box; and
canceling displaying of the fifth interface in response to a confirmation operation performed by the user in the selection preview box, and re-displaying the interaction window, wherein displaying of the fourth material is canceled in the first display column in the interaction window.

12. The method according to any one of claims 1 to 4, wherein after the photographing a third material, the method further comprises:
displaying a sixth interface, wherein the sixth interface is a preview interface of the third material, and the sixth interface comprises a second control; and
the displaying a third interface in response to a second operation comprises: displaying the third interface in response to an operation performed by the user on the second control.

13. The method according to any one of claims 1 to 4, wherein after the photographing a third material, the method further comprises:
displaying a sixth interface, wherein the sixth interface is a preview interface of the third material, and the sixth interface comprises a third control; and
displaying a fourth interface in response to an operation performed by the user on the third control, wherein the fourth interface displays a preview stream collected in real time by the camera, the fourth interface further displays a fourth material, and the fourth material is different from the second material.

14. A media data generation method, applied to an electronic device, wherein the electronic device comprises a camera, and the method comprises:
displaying a first card when a material that meets a first condition is stored in the electronic device, wherein the first condition comprises a combination of one or more of the following: a photographing location is the same as a current location of the electronic device, or a distance is less than a preset distance threshold; and a time interval between a photographing time and a current time point exceeds a preset time threshold;
displaying an interaction window after an operation performed by a user on the first card is detected, wherein the interaction window comprises a first control and a first display column, the first display column comprises a first material and a second material, and the first material and the second material are materials that meet the first condition;
displaying a seventh interface in response to an operation performed by the user on the first control, wherein the seventh interface displays a preview stream collected in real time by the camera;
photographing a seventh material in response to a first operation performed by the user to indicate photographing;
re-displaying the interaction window in response to a second operation, wherein a second display column is newly displayed in the interaction window, and the seventh material is displayed in the second display column; and
newly displaying third stitched data in the interaction window in response to a fifth operation performed by the user, wherein the third stitched data comprises the seventh material and the second material, and a similarity evaluation value between the seventh material and the second material is higher than a similarity evaluation value between the seventh material and the first material, wherein
the similarity evaluation value is a quantized value of a similarity between image content of different materials, and a higher similarity between person postures in the different materials corresponds to a higher similarity evaluation value.

15. The method according to claim 14, wherein the interaction window further comprises a fourth control, the fourth control is displayed for the first display column, and the method further comprises:
displaying second media data in the interaction window in response to an operation performed by the user on the fourth control, wherein the second media data comprises the first material and the second material.

16. An electronic device, comprising a memory, a processor, and a computer program stored in the memory, wherein the processor executes the computer program, to implement the steps of the method according to any one of claims 1 to 15.

17. A computer-readable storage medium, wherein the computer-readable storage medium stores a computer program/instructions, wherein when the computer program/instructions are executed by a processor, the steps of the method according to any one of claims 1 to 15 are implemented.

18. A computer program product, comprising a computer program/instructions, wherein when the computer program/instructions are executed by a processor, the steps of the method according to any one of claims 1 to 15 are implemented.
